(19)
Europäisches
Patentamt

European
Patent Office

Office européen
des brevets

(11) **EP 4 671 064 A1**

(12) **EUROPEAN PATENT APPLICATION**
published in accordance with Art. 153(4) EPC

(43) Date of publication:
**31.12.2025  Bulletin 2026/01**

(21) Application number: **24759508.5**

(22) Date of filing: **01.02.2024**

(51) International Patent Classification (IPC):
**B60W 30/06** (2006.01)

(52) Cooperative Patent Classification (CPC):
**B60W 30/06**

(86) International application number:
**PCT/CN2024/075258**

(87) International publication number:
**WO 2024/174831 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **23.02.2023  CN 202310201944**

(71) Applicant: **Shenzhen Yinwang Intelligent
Technologies Co., Ltd.
Shenzhen, Guangdong 518110 (CN)**

(72) Inventors:
• **WANG, Zhikai**
 **Shenzhen, Guangdong 518129 (CN)**
• **LIN, Yubin**
 **Shenzhen, Guangdong 518129 (CN)**
• **TONG, Liuzhu**
 **Shenzhen, Guangdong 518129 (CN)**
• **ZHANG, Yu**
 **Shenzhen, Guangdong 518129 (CN)**
• **WANG, Xinyu**
 **Shenzhen, Guangdong 518129 (CN)**

(74) Representative: **Gill Jennings & Every LLP
The Broadgate Tower
20 Primrose Street
London EC2A 2ES (GB)**

(54) **CONTROL METHOD, DEVICE, AND VEHICLE**

(57)    A control method includes: obtaining a first idle parking space set, where the first idle parking space set includes a first idle parking space and a second idle parking space; when a first parking trajectory is obtained, controlling a display apparatus to display a first recommended parking space set, where the first recommended parking space set includes the first idle parking space, and the first parking trajectory is a trajectory of parking a vehicle in the first idle parking space; and when a second parking trajectory is obtained, controlling the display apparatus to switch from displaying the first recommended parking space set to displaying a second recommended parking space set, where the second recommended parking space set includes the first idle parking space and the second idle parking space, and the second parking trajectory is a trajectory of parking the vehicle in the second idle parking space. The control method is applied to an intelligent vehicle or an electric vehicle, to help reduce waiting duration of a user waiting for a recommended parking space, and help improve user experience during parking. An apparatus and a vehicle for implementing the control method are further provided.

300

| |
|---|
| Obtain a first idle parking space set, where the first idle parking space set includes a first idle parking space and a second idle parking space |

S310

| |
|---|
| When a first parking track is obtained, control a display apparatus to display a first recommended parking space set, where the first recommended parking space set includes the first idle parking space, and the first parking track is a track of parking a vehicle in the first idle parking space |

S320

| |
|---|
| When a second parking track is obtained, control the display apparatus to switch from displaying the first recommended parking space set to displaying a second recommended parking space set, where the second recommended parking space set includes the first idle parking space and the second idle parking space, and the second parking track is a track of parking the vehicle in the second idle parking space |

S330

FIG. 3

## Description

### TECHNICAL FIELD

Embodiments of this application relate to the field of intelligent driving, and more specifically, to a control method and apparatus, and a vehicle.

### BACKGROUND

Auto parking (auto parking, AP) means that a vehicle is automatically parked in a parking space, to be specific, an autonomous driving system of the vehicle can help a user park the vehicle in a parking space semi-automatically or automatically. Auto parking may include auto parking assist (auto parking assist, APA), remote parking assist (remote parking assist, RPA), auto valet parking (auto valet parking, AVP), and the like.

A parking space recommendation function is a function to recommend, based on recommendation degrees, a parking space to the user when there are a series of idle parking spaces. It is also an important function in auto parking. The parking space recommendation function can greatly improve comfort and applicability during parking by the user.

Currently, a vehicle needs to calculate related features of all parking spaces in surrounding space before a parking space is recommended. As a result, time for the user to wait for the recommended parking space is long, and user experience is poor.

### SUMMARY

This application provides a control method and apparatus, and a vehicle, to help reduce waiting duration of a user waiting for a recommended parking space, and help improve parking experience of the user.

The vehicle in this application may be a vehicle in a broad sense, and may be a transport means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not limited in embodiments of this application.

According to a first aspect, this application provides a control method. The method includes: obtaining a first idle parking space set, where the first idle parking space set includes a first idle parking space and a second idle parking space; when a first parking trajectory is obtained, controlling a display apparatus to display a first recommended parking space set, where the first recommended parking space set includes the first idle parking space, and the first parking trajectory is a trajectory of parking a vehicle in the first idle parking space; and when a second parking trajectory is obtained, controlling the display apparatus to switch from displaying the first recommended parking space set to displaying a second recommended parking space set, where the second recommended parking space set includes the first idle parking space and the second idle parking space, and the second parking trajectory is a trajectory of parking the vehicle in the second idle parking space.

Based on the foregoing technical solution, after the first idle parking space set is obtained, the first parking trajectory corresponding to the first idle parking space in the first idle parking space set may be first obtained, and the display apparatus is controlled to display the first recommended parking space set after the first parking trajectory is obtained; and then the second parking trajectory corresponding to the second idle parking space in the first idle parking space set is obtained, and the display apparatus is controlled to display the second recommended parking space set after the second parking trajectory is obtained. In this way, after a parking trajectory corresponding to a specific idle parking space is obtained, the specific parking space may be recommended to the user instead of recommending a parking space to the user after all parking trajectories corresponding to idle parking spaces are planned. This helps reduce waiting duration of the user waiting for a recommended parking space, and helps improve parking experience of the user.

In some possible implementations, the controlling the display apparatus to switch from displaying the first recommended parking space set to displaying a second recommended parking space set may also be understood as recommending parking spaces to the user in an incremental manner.

In some possible implementations, that a first parking trajectory is obtained includes: determining the first parking trajectory based on a current pose of the vehicle, a pose of the first idle parking space, and information about an obstacle around the vehicle.

In some possible implementations, that a first parking trajectory is obtained includes: sending the current pose of the vehicle, the pose of the first idle parking space, and the information about an obstacle around the vehicle to a cloud server; and receiving the first parking trajectory that is determined by the cloud server based on the current pose of the vehicle, the pose of the first idle parking space, and the information about an obstacle around the vehicle.

Based on the foregoing technical solution, the vehicle may send the current pose of the vehicle, the pose of the first idle parking space, and the information about an obstacle around the vehicle to the cloud server, so that the cloud server may plan the first parking trajectory with reference to the foregoing information. A computing capability of the cloud server is stronger. This helps improve efficiency of planning and obtaining a parking trajectory, further shortens waiting duration of the user waiting for a recommended parking space, and helps improve parking experience of the user.

In some possible implementations, that a second parking trajectory is obtained includes: determining the second parking trajectory based on a current pose of the vehicle, a pose of the second idle parking space, and information about an obstacle around the vehicle.

In some possible implementations, that a second parking trajectory is obtained includes: sending the current pose of the vehicle, the pose of the second idle parking space, and the information about an obstacle around the vehicle to a cloud server; and receiving the second parking trajectory that is determined by the cloud server based on the current pose of the vehicle, the pose of the second idle parking space, and the information about an obstacle around the vehicle.

In some possible implementations, before the first parking trajectory is obtained, the method further includes: determining priority information, where the priority information indicates that a priority of obtaining the first parking trajectory is higher than a priority of obtaining the second parking trajectory.

With reference to the first aspect, in some implementations of the first aspect, the method further includes: determining priority information based on at least one of a first parking space parameter, a second parking space parameter, and a historical parking record of the user, where the priority information indicates that the priority of obtaining the first parking trajectory is higher than the priority of obtaining the second parking trajectory; and the first parking space parameter includes a pose of the first idle parking space relative to the vehicle and a pose of the second idle parking space relative to the vehicle, and the second parking space parameter includes information about an obstacle around the first idle parking space and information about an obstacle around the second idle parking space.

Based on the foregoing technical solution, before the first parking trajectory is obtained, it may be first determined, based on at least one of the first parking space parameter, the second parking space parameter, and the historical parking record, that the priority of obtaining the first parking trajectory is higher than the priority of obtaining the second parking trajectory. This helps further shorten waiting duration of the user waiting for a recommended parking space, and can ensure that there is a high probability that the recommended parking space that is first presented to the user is also the most satisfactory parking space of the user. This helps improve parking experience of the user.

With reference to the first aspect, in some implementations of the first aspect, the method further includes: controlling, based on the priority information, the first parking trajectory, and the second parking trajectory, the display apparatus to display recommendation priorities of the first idle parking space and the second idle parking space.

Based on the foregoing technical solution, when the display apparatus is controlled to display the second recommended parking space set, the recommendation priorities of the first idle parking space and the second idle parking space may be further displayed. In this way, the user can clearly learn of sorting on the recommendation priorities of the idle parking spaces, and the user can make a better decision. This helps improve parking experience of the user.

With reference to the first aspect, in some implementations of the first aspect, the controlling, based on the priority information, the first parking trajectory, and the second parking trajectory, the display apparatus to display recommendation priorities of the first idle parking space and the second idle parking space includes: determining a parking parameter based on the first parking trajectory and the second parking trajectory, where the parking parameter includes at least one of a quantity of gear shift times, a parking risk, and parking time for parking the vehicle in each of the first idle parking space and the second idle parking space; and controlling, based on the priority information and the parking parameter, the display apparatus to display the recommendation priorities of the first idle parking space and the second idle parking space.

Based on the foregoing technical solution, the idle parking space is comprehensively evaluated with reference to the priority information and at least one of quantities of gear shift times, parking risks, and parking time for parking the vehicle in different parking spaces. This helps improve accuracy of recommending a parking space to the user. In addition, the user can clearly learn of sorting on the recommendation priorities of the idle parking spaces, and the user can make a better decision. This helps improve parking experience of the user.

With reference to the first aspect, in some implementations of the first aspect, the recommendation priority of the first idle parking space is higher than the recommendation priority of the second idle parking space, and the method further includes: when an operation of selecting, by the user, a parking space from the second recommended parking space set is not detected within preset duration, controlling the vehicle to automatically drive into the first idle parking space.

Based on the foregoing technical solution, when it is not detected, within the preset duration, that the user selects a parking space from the recommended parking space set, the vehicle may be directly controlled to automatically drive into a parking space with a high recommendation priority, to avoid a complex operation of selecting a parking space from a plurality of recommended parking spaces by the user. This helps improve parking experience of the user.

In some possible implementations, before the second parking trajectory is obtained, if an input of the user selecting the first idle parking space from the first recommended parking space set and determining to park in the first idle parking space is detected, the vehicle is controlled to drive into the first idle parking space and obtaining of the second parking trajectory is stopped.

Based on the foregoing technical solution, the user may interrupt an incremental parking space recommendation process at any time, and select the first idle parking space from the recommended parking spaces to immediately park in, without a need to recommend a parking space to the user after parking trajectories of a plurality of idle parking spaces are all planned. This helps shorten waiting duration of the user waiting for a recommended parking space. In addition, when it is determined to park in the first idle parking space, obtaining of a parking trajectory corresponding to another idle parking space may be stopped. This helps reduce calculation overheads.

With reference to the first aspect, in some implementations of the first aspect, the method further includes: when an input of selecting, by the user, the first idle parking space from the second recommended parking space set is detected, controlling the display apparatus to display the first parking trajectory and prompt the user whether to park in the first idle parking space; and when an input of determining, by the user, to park in the first idle parking space is detected, controlling, based on the first parking trajectory, the vehicle to drive into the first idle parking space.

Based on the foregoing technical solution, the user may select a specific parking space from the recommended parking spaces, to obtain a visualized result of a trajectory of parking in the corresponding parking space. When determining to drive into the parking space, the vehicle may automatically drive into the parking space.

With reference to the first aspect, in some implementations of the first aspect, the first idle parking space set further includes a third idle parking space, and the method further includes: obtaining a third parking trajectory when an input of selecting the third idle parking space by the user is detected, where the third parking trajectory is a trajectory of parking the vehicle in the third idle parking space; and controlling the display apparatus to switch from displaying the second recommended parking space set to displaying a third recommended parking space set, where the third recommended parking space set includes the third idle parking space.

Based on the foregoing technical solution, in an incremental parking space recommendation process, after an input of selecting, by the user, a parking space that has not been recommended in idle parking spaces is detected, incremental re-recommendation may be triggered at any time, to avoid a waste of computing resources on a parking space that is not expected by the user. This helps shorten waiting duration of the user waiting for a recommended parking space in an area expected by the user, and helps improve parking experience of the user.

With reference to the first aspect, in some implementations of the first aspect, the method further includes: controlling the display apparatus to display the first idle parking space set.

Based on the foregoing technical solution, in an incremental parking space recommendation process, it can be convenient for the user to view an idle parking space and a recommended parking space by using the display apparatus.

In some possible implementations, a color of a parking space in the idle parking space set is different from a color of a parking space in the recommended parking space set. In this way, the user can quickly distinguish which parking spaces belong to idle parking spaces and belong to unrecommended parking spaces, and which parking spaces belong to idle parking spaces and belong to recommended parking spaces.

With reference to the first aspect, in some implementations of the first aspect, before the obtaining a first idle parking space set, the method further includes: determining that a speed of the vehicle is less than or equal to a preset speed threshold.

In some possible implementations, the determining that a speed of the vehicle is less than or equal to a preset speed threshold includes: determining that the speed of the vehicle is 0.

According to a second aspect, this application provides a control apparatus. The apparatus includes: an obtaining unit, configured to obtain a first idle parking space set, where the first idle parking space set includes a first idle parking space and a second idle parking space; and a control unit, configured to: when the obtaining unit obtains a first parking trajectory, control a display apparatus to display a first recommended parking space set, where the first recommended parking space set includes the first idle parking space, and the first parking trajectory is a trajectory of parking a vehicle in the first idle parking space. The control unit is further configured to: when the obtaining unit obtains a second parking trajectory, control the display apparatus to switch from displaying the first recommended parking space set to displaying a second recommended parking space set, where the second recommended parking space set includes the first idle parking space and the second idle parking space, and the second parking trajectory is a trajectory of parking the vehicle in the second idle parking space.

With reference to the second aspect, in some implementations of the second aspect, the apparatus further includes: a first determining unit, configured to determine priority information based on at least one of a first parking space parameter, a second parking space parameter, and a historical parking record of a user. The priority information indicates that the priority of obtaining the first parking trajectory is higher than the priority of obtaining the second parking trajectory; and the first parking space parameter includes a pose of the first idle parking space relative to the vehicle and a pose of the second idle parking space relative to the vehicle, and the second parking space parameter includes information about an obstacle around the first idle parking space and information about an obstacle around the second idle parking space.

With reference to the second aspect, in some implementations of the second aspect, the control unit is further configured to: control, based on the priority information, the first parking trajectory, and the second parking trajectory, the display apparatus to display recommendation priorities of the first idle parking space and the second idle parking space.

With reference to the second aspect, in some implementations of the second aspect, the apparatus further includes: a second determining unit, configured to determine a parking parameter based on the first parking trajectory and the second parking trajectory, where the parking parameter includes at least one of a quantity of gear shift times, a parking risk, and parking time for parking the vehicle in each of the first idle parking space and the second idle parking space. The control unit is configured to control, based on the priority information and the parking parameter, the display apparatus to display the recommendation priorities of the first idle parking space and the second idle parking space.

With reference to the second aspect, in some implementations of the second aspect, the recommendation priority of the first idle parking space is higher than the recommendation priority of the second idle parking space. The apparatus further includes a detection unit, and the control unit is configured to: when the detection unit does not detect, within preset duration, an operation of selecting, by the user, a parking space from the second recommended parking space set, control the vehicle to automatically drive into the first idle parking space.

With reference to the second aspect, in some implementations of the second aspect, the apparatus further includes the detection unit, and the control unit is configured to: when the detection unit detects an input of selecting, by the user, the first idle parking space from the second recommended parking space set, control the display apparatus to display the first parking trajectory and prompt the user whether to park in the first idle parking space; and when the detection unit detects an input of determining, by the user, to park in the first idle parking space, control, based on the first parking trajectory, the vehicle to drive into the first idle parking space.

With reference to the second aspect, in some implementations of the second aspect, the first idle parking space set further includes a third idle parking space. The obtaining unit is further configured to obtain a third parking trajectory when the user selects the third idle parking space, where the third parking trajectory is a trajectory of parking the vehicle in the third idle parking space. The control unit is further configured to control the display apparatus to switch from displaying the second recommended parking space set to displaying a third recommended parking space set, where the third recommended parking space set includes the third idle parking space.

With reference to the second aspect, in some implementations of the second aspect, the control unit is further configured to control the display apparatus to display the first idle parking space set.

With reference to the second aspect, in some implementations of the second aspect, the apparatus further includes: a third determining unit, configured to: before the obtaining unit obtains the first idle parking space set, determine that a speed of the vehicle is less than or equal to a preset speed threshold.

According to a third aspect, this application provides a control apparatus. The apparatus includes a processing unit and a storage unit. The storage unit is configured to store instructions, and the processing unit executes the instructions stored in the storage unit, so that the apparatus performs any possible control method in the first aspect.

According to a fourth aspect, this application provides a control system. The control system includes a sensor and a computing platform. The computing platform includes any possible control apparatus in the second aspect, or includes the control apparatus in the third aspect.

With reference to the fourth aspect, in some implementations of the fourth aspect, the control system further includes a display apparatus.

With reference to the fourth aspect, in some implementations of the fourth aspect, the computing platform is located in a cloud server.

According to a fifth aspect, this application provides a vehicle. The vehicle includes any possible control apparatus in the second aspect, or includes the control apparatus in the third aspect, or includes the control system in the fourth aspect.

According to a sixth aspect, this application provides a server. The server includes any possible control apparatus in the second aspect or the third aspect.

With reference to the sixth aspect, in some implementations of the sixth aspect, the server further includes a communication unit. The communication unit is configured to: receive data that is collected by a sensor of a vehicle and that is sent by the vehicle; and send information about a recommended parking space set to the vehicle.

According to a seventh aspect, a mobile terminal is provided. The mobile terminal includes any possible control apparatus in the second aspect or the third aspect.

According to an eighth aspect, this application provides a computer program product, where the computer program product includes computer program code, and when the computer program code is run on a computer, the computer is enabled to perform any possible control method in the first aspect.

It should be noted that all or some of the computer program code may be stored in a first storage medium. The first storage medium may be packaged together with a processor, or may be packaged separately from a processor. This is not specifically limited in this embodiment of this application.

According to a ninth aspect, this application provides a computer-readable medium, where the computer-readable medium stores program code, and when the computer program code is run on a computer, the computer is enabled to perform any possible control method in the first aspect.

According to a tenth aspect, this application provides a chip. The chip includes a circuit, and the circuit is

**EP 4 671 064 A1**

configured to perform any possible control method in the first aspect.

## BRIEF DESCRIPTION OF DRAWINGS

FIG. 1 is a functional block diagram of a vehicle according to an embodiment of this application;
FIG. 2 is a block diagram of a parking system according to an embodiment of this application;
FIG. 3 is a schematic flowchart of a control method according to an embodiment of this application;
FIG. 4 is a block diagram of another system according to an embodiment of this application;
FIG. 5 is a diagram of a visual feature of a driver according to an embodiment of this application;
FIG. 6 shows a human machine interface HMI according to an embodiment of this application;
FIG. 7(a) and FIG. 7(b) are a diagram of a group of HMIs according to an embodiment of this application;
FIG. 8(a) and FIG. 8(b) are a diagram of another group of HMIs according to an embodiment of this application;
FIG. 9(a) and FIG. 9(b) are a diagram of another group of HMIs according to an embodiment of this application;
FIG. 10(a) and FIG. 10(b) are a diagram of another group of HMIs according to an embodiment of this application; and
FIG. 11 is a block diagram of a control apparatus according to an embodiment of this application.

## DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. "At least one item" means one or more items. For example, "at least one of A and B", similar to "A and/or B", describes an association relationship of associated objects, and indicates that three relationships may exist. For example, the at least one of A and B may indicate the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. In embodiments of this application, use of the prefix words, for example, an ordinal number, used to distinguish between the described objects does not constitute a limitation on the described objects. For descriptions of the described objects, refer to the descriptions of the context in the claims or embodiments. The use of such prefix words should not constitute a redundant limitation. In addition, in the descriptions of embodiments, unless otherwise specified, "a plurality of" means two or more than two.

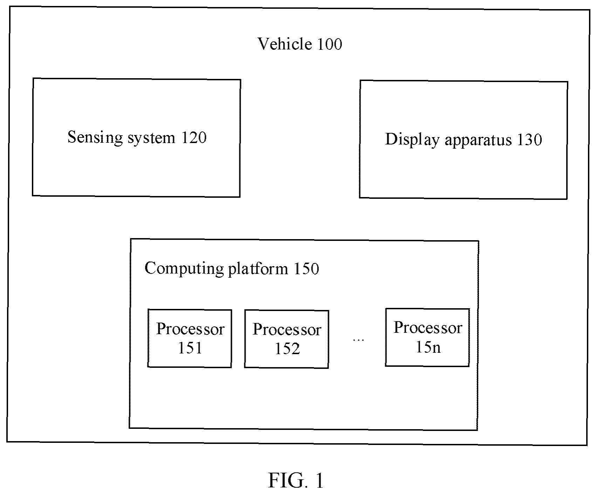

FIG. 1 is a functional block diagram of a vehicle 100 according to an embodiment of this application. The vehicle 100 may include a sensing system 120, a display apparatus 130, and a computing platform 150. The sensing system 120 may include one or more sensors that sense information about an ambient environment of the vehicle 100. For example, the sensing system 120 may include a positioning system. The positioning system may be a global positioning system (global positioning system, GPS), a BeiDou system, or another positioning system. The sensing system 120 may further include one or more of an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

The display apparatus 130 in a cockpit is mainly classified into two types: a first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cockpit, for example, a digital dashboard display, a central display screen, a display in front of a passenger in a front passenger seat (also referred to as a front-row passenger), a display in front of a rear-seat passenger on the left, and a display in front of a rear-seat passenger on the right. Even a window may be used as a display for display. Head-up display, also referred to as a head-up display system, is mainly configured to display driving information such as a speed and navigation on a display device (for example, a windshield) in front of a driver, to reduce line-of-sight transfer time of the driver, avoid a pupil change caused by line-of-sight transfer of the driver, and improve driving safety and comfort. For example, the HUD includes a combiner-HUD (combiner-HUD, C-HUD) system, a windshield-HUD (windshield-HUD, W-HUD) system, and an augmented reality HUD (augmented reality HUD, AR-HUD) system. It should be understood that the HUD may alternatively have another type of system with technology evolution. This is not limited in this application.

As described above, currently, a vehicle needs to calculate related features of all parking spaces in surrounding space before a parking space is recommended. As a result, time for the user to wait for the recommended parking space is long, and user experience is poor.

Embodiments of this application provide a parking method and apparatus, and a vehicle, to help reduce waiting duration of a user waiting for a recommended parking space, and help improve parking experience of the user.

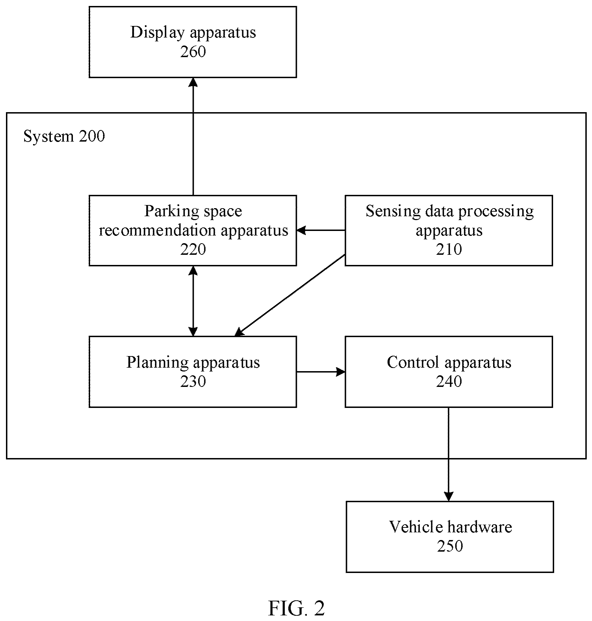

FIG. 2 is a diagram of a parking system 200 according to an embodiment of this application. As shown in FIG. 2, the system 200 includes a sensing data processing apparatus 210, a parking space recommendation apparatus 220, a planning apparatus 230, and a control apparatus 240.

The sensing data processing apparatus 210 is configured to: receive data collected by a sensor of a vehicle, and determine idle parking spaces and location information of the idle parking spaces based on the data. The sensing data processing apparatus 210 may send the idle parking spaces and the location information of the idle parking spaces to the parking space recommendation apparatus 220 and the planning apparatus 230.

After receiving the idle parking spaces and the location information of the idle parking spaces that are sent by the sensing data processing apparatus 210, the planning system 230 may plan the idle parking spaces by using a planning algorithm, and send parking trajectories corresponding to the planned parking spaces to the parking space recommendation system 220.

The parking space recommendation system 220 may perform comprehensive score calculation and dynamic sorting on the parking spaces based on the idle parking spaces and location information of the idle parking spaces that are sent by the sensing data processing apparatus 210, the parking trajectories of the planned parking spaces that are sent by the planning system 230, and a user intent input from a display apparatus 260, and control the display apparatus 260 to incrementally prompt the user with information about the recommended parking spaces.

The control apparatus 240 may be connected vehicle hardware 250. When determining an operation of selecting a parking space from the recommended parking spaces by the user, the parking space recommendation system 220 may indicate the planning apparatus 230 to send a parking trajectory corresponding to the parking space to the control apparatus 240. The control apparatus 240 may control the vehicle hardware 250 based on the parking trajectory corresponding to the parking space, so that the vehicle completes an automatic parking operation.

Optionally, the vehicle hardware 250 and/or the display apparatus 260 may alternatively be located in the parking system 200.

The sensing data processing apparatus 210, the parking space recommendation apparatus 220, the planning apparatus 230, and the control apparatus 240 may be located in the computing platform 150, and the display apparatus 260 may be the display apparatus 130. The vehicle hardware 250 may include a steering system, a braking system, a gear shift system, and the like.

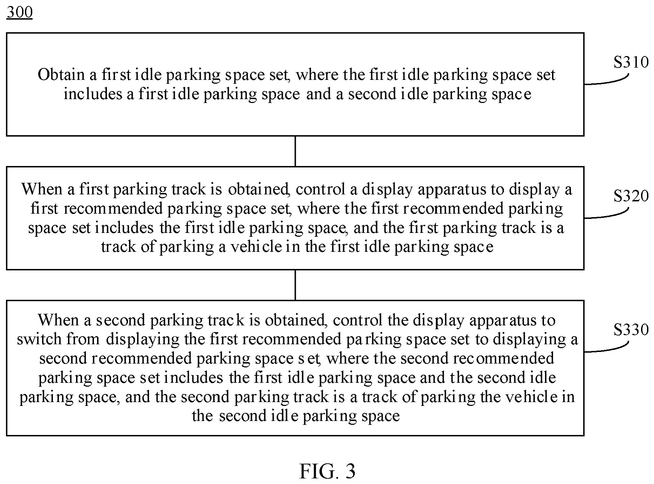

FIG. 3 is a schematic flowchart of a control method 300 according to an embodiment of this application. The method 300 may be performed by the vehicle 100 shown in FIG. 1, or the method 300 may be performed by the computing platform 150, or the method 300 may be performed by a system including the computing platform 150 and a sensor, or the method 300 may be performed by a system-on-chip (system-on-chip, SoC) in the computing platform 150, or the method 300 may be performed by a processor in the computing platform 150, or the method 300 may be performed by the parking system 200, or the method 300 may be performed by a mobile terminal (for example, a mobile phone). The following uses an example in which an execution body is a vehicle for description. The method 300 includes the following steps.

S310: Obtain a first idle parking space set, where the first idle parking space set includes a first idle parking space and a second idle parking space.

Optionally, the idle parking space may be an area (for example, a rectangular area) divided by using a parking space line, and there is no obstacle (for example, a vehicle, a ground lock, or a motorcycle) in the area.

Alternatively, the idle parking space may be an area that is not divided by using a parking space line. The vehicle may perform area division based on information about an obstacle around the vehicle, and determine some areas as areas in which the idle parking space is located.

Optionally, before the obtaining a first idle parking space set, the method 300 further includes: determining that a speed of the vehicle is less than or equal to a preset speed threshold.

Optionally, the determining that a speed of the vehicle is less than or equal to a preset speed threshold includes: determining that the speed of the vehicle is 0.

For example, when the vehicle enters a parking area (for example, a ground parking lot or an underground parking lot) and the speed of the vehicle is 0, one or more idle parking spaces around the vehicle may be determined based on data collected by a sensor outside a cockpit. For example, the sensor outside the cockpit includes but is not limited to at least one of a camera, a millimeter-wave radar, a centimeter-wave radar, or a lidar.

Optionally, the method 300 further includes: controlling the display apparatus to display the first idle parking space set.

For example, the vehicle may display, by using a central control screen, information about the one or more idle parking spaces around the vehicle.

Optionally, the controlling a display apparatus to display the first idle parking space set includes: controlling the display apparatus to display each idle parking space in the first idle parking space set in a first color.

S320: When a first parking trajectory is obtained, control the display apparatus to display a first recommended parking space set, where the first recommended parking space set includes the first idle parking space, and the first parking trajectory is a trajectory of parking the vehicle in the first idle parking space.

Optionally, that a first parking trajectory is obtained includes: determining the first parking trajectory based on a current pose of the vehicle, a pose of the first idle parking space, and the information about the obstacle around the vehicle.

Optionally, that a first parking trajectory is obtained includes: The vehicle sends the current pose of the vehicle, the pose of the first idle parking space, and the information about the obstacle around the vehicle to a cloud server; and the vehicle receives the first parking trajectory that is determined by the cloud server based on the current pose of the vehicle, the pose of the first idle parking space, and the information about the obstacle around the vehicle. A computing capability of the cloud server is stronger. This helps improve efficiency of planning and obtaining a parking trajectory, further shortens waiting duration of a user waiting for a recommended parking space, and helps improve parking experience of the user.

Optionally, the vehicle may randomly determine that a priority of obtaining the first parking trajectory is higher than a priority of obtaining a parking trajectory of a parking space other than the first idle parking space in the first idle parking space set.

In this way, after the first idle parking space set is obtained, the first parking trajectory corresponding to the first idle parking space in the first idle parking space set may be first obtained, and after the first parking trajectory is obtained, the display apparatus is controlled to display the first recommended parking space set. In this way, after a parking trajectory corresponding to a specific idle parking space is obtained, the specific parking space may be recommended to the user instead of recommending a parking space to the user after all parking trajectories corresponding to idle parking spaces are planned. This helps reduce waiting duration of the user waiting for a recommended parking space, and helps improve parking experience of the user.

Optionally, the controlling the display apparatus to display a first recommended parking space set includes: controlling the display apparatus to display the first recommended parking space set in a second color, where the first color is different from the second color.

S330: When a second parking trajectory is obtained, control the display apparatus to switch from displaying the first recommended parking space set to displaying a second recommended parking space set, where the second recommended parking space set includes the first idle parking space and the second idle parking space, and the second parking trajectory is a trajectory of parking the vehicle in the second idle parking space.

Optionally, the controlling the display apparatus to display a second recommended parking space set includes: controlling the display apparatus to display the second recommended parking space set in the second color.

The controlling the display apparatus to switch from displaying the first recommended parking space set to displaying a second recommended parking space set may also be understood as recommending parking spaces to the user in an incremental manner.

Optionally, that a second parking trajectory is obtained includes: determining the second parking trajectory based on the current pose of the vehicle, a pose of the second idle parking space, and the information about the obstacle around the vehicle.

Optionally, that a second parking trajectory is obtained includes: sending the current pose of the vehicle, the pose of the second idle parking space, and the information about the obstacle around the vehicle to the cloud server; and receiving the second parking trajectory that is determined by the cloud server based on the current pose of the vehicle, the pose of the second idle parking space, and the information about the obstacle around the vehicle.

Optionally, before the first parking trajectory is obtained, the method further includes: determining priority information, where the priority information indicates that a priority of obtaining the first parking trajectory is higher than a priority of obtaining the second parking trajectory.

Optionally, the determining priority information includes: determining the priority information based on at least one of a first parking space parameter, a second parking space parameter, and a historical parking record of the user, where the priority information indicates that the priority of obtaining the first parking trajectory is higher than the priority of obtaining the second parking trajectory; and the first parking space parameter includes a pose of the first idle parking space relative to the vehicle and a pose of the second idle parking space relative to the vehicle, and the second parking space parameter includes information about an obstacle around the first idle parking space and information about an obstacle around the second idle parking space.

For example, the first parking space parameter may be used to reflect a visual feature of the idle parking space relative to a driver. For example, the visual feature of the idle parking space relative to the driver may include a visual distance and a visual angle of an intersection point of two diagonal lines of the parking space relative to the driver.

For example, the second parking space parameter may be used to reflect an idleness feature of the idle parking space. The idleness feature of the parking space determines difficulty of automatic parking planning of the vehicle.

For example, the historical parking record includes information about a start location and a final parking space of the vehicle that are obtained when the user drives the vehicle for parking or the vehicle is automatically parked in a past time period.

Optionally, the method 300 further includes: controlling, based on the priority information, the first parking trajectory, and the second parking trajectory, the display apparatus to display recommendation priorities of the first idle parking space and the second idle parking space. In this way, when the display apparatus is controlled to display the second recommended parking space set, the recommendation priorities of the first idle parking space and the second idle parking space may be further displayed, so that the user can clearly learn of sorting on the recommendation priorities of the idle parking spaces, and the user can make a better decision. This helps improve parking experience of the user.

Optionally, the controlling, based on the priority information, the first parking trajectory, and the second parking trajectory, the display apparatus to display recommendation priorities of the first idle parking space and the second idle parking space includes: determining a parking parameter based on the first parking trajectory and the second parking trajectory, where the parking parameter includes at least one of a quantity of gear shift times, a parking risk, and parking time for parking the vehicle in each of the first idle parking space and the second idle parking space; and controlling, based on the priority information and the parking parameter, the display apparatus to display the recommendation priorities of the first idle parking space and the second idle parking space.

For example, the quantity of gear shift times may include a quantity of times of alternating between a forward gear (D gear) and a reverse gear (R gear) in the parking trajectory.

For example, the parking risk may reflect a risk of a collision between a planned parking trajectory and an obstacle in an entire process.

For example, the parking time may be time required by the vehicle to track a planned parking trajectory, and the required time is jointly determined by planning results of a length of the parking trajectory and a speed of the vehicle during parking.

Optionally, the recommendation priority of the first idle parking space is higher than the recommendation priority of the second idle parking space, and the method 300 further includes: when an operation of selecting, by the user, a parking space from the second recommended parking space set is not detected within preset duration, controlling the vehicle to automatically drive into the first idle parking space.

Optionally, before the second parking trajectory is obtained, if an input of selecting, by the user, the first idle parking space from the first recommended parking space set is detected, the display apparatus is controlled to display the first parking trajectory and obtaining of the second parking trajectory is stopped.

Optionally, the method 300 further includes: when an input of selecting, by the user, the first idle parking space from the second recommended parking space set is detected, controlling the display apparatus to display the first parking trajectory and prompt the user whether to park in the first idle parking space; and when an input of determining, by the user, to park in the first idle parking space is detected, controlling, based on the first parking trajectory, the vehicle to drive into the first idle parking space.

Optionally, the first idle parking space set further includes a third idle parking space, and the method 300 further includes: obtaining a third parking trajectory when an input of selecting the third idle parking space by the user is detected, where the third parking trajectory is a trajectory of parking the vehicle in the third idle parking space; and controlling the display apparatus to switch from displaying the second recommended parking space set to displaying a third recommended parking space set, where the third recommended parking space set includes the third idle parking space. In this way, in an incremental parking space recommendation process, after an input of selecting, by the user, a parking space that has not been recommended in idle parking spaces is detected, incremental re-recommendation may be triggered at any time, to avoid a waste of computing resources on a parking space that is not expected by the user. This helps shorten waiting duration of the user waiting for a recommended parking space in an area expected by the user, and helps improve parking experience of the user.

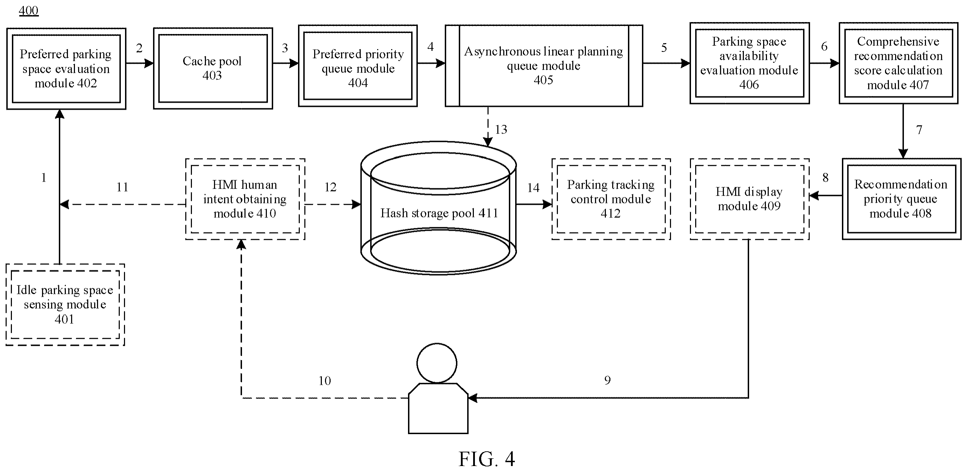

FIG. 4 is a block diagram of another system 400 according to an embodiment of this application. The system 400 includes an idle parking space sensing module 401, a preferred parking space evaluation module 402, a cache pool 403, a preferred priority queue module 404, an asynchronous linear planning queue module 405, a parking space availability evaluation module 406, a comprehensive recommendation score calculation module 407, a recommendation priority queue module 408, a human machine interface (human machine interface, HMI) display module 409, an HMI human intent obtaining module 410, a hash storage pool 411, and a parking tracking control module 412.

The idle parking space sensing module 401 is configured to: obtain data collected by a sensor outside a vehicle cockpit, and determine a set of idle parking spaces around a vehicle based on the data. As shown by a connection line numbered 1, the idle parking space sensing module 401 may send a determined idle parking space set to the preferred parking space evaluation module 402.

Optionally, a dashed line numbered 11 indicates that a user may selectively intervene in a calculation process of the preferred parking space evaluation module 402 to participate in evaluation of a preferred parking space.

The preferred parking space evaluation module 402 is configured to score the idle parking space set. As shown by a connection line numbered 2, the preferred parking space evaluation module 402 may send each parking space in the idle parking space set and a score corresponding to each parking space to the cache pool 403.

After receiving each parking space and the score corresponding to each parking space, the cache pool 403 caches the parking space and the score until the preferred parking space evaluation module 402 completes transmission. This process takes very short time because the preferred parking space evaluation module 402 takes very short time to calculate a score of each parking space.

As shown by a connection line numbered 3, after the cache pool 403 completes caching, cached parking spaces and scores corresponding to the parking spaces are continuously sent to the preferred priority queue module 404 at a time. The preferred priority queue module 404 may construct a large heap based on a score of each parking space with time complexity of O(n), where n is a quantity of sensed idle parking spaces.

In this embodiment of this application, each parking space and the score corresponding to each parking space are cached by the cache pool 403, so that calculation complexity of the system 400 can be reduced, or time complexity of heap construction can be reduced.

As shown by a connection line numbered 4, the preferred priority queue module 404 sends related parking space information to the asynchronous linear planning queue module 405. The asynchronous linear planning queue module 405 may sequentially plan parking trajectories of idle parking spaces based on a parking trajectory planning algorithm according to a rule of planning only a head parking space; planning a new head parking space only after the head parking space is planned within a specific time period, popped up, and discarded; popping up and pushing the head parking space to the tail of a queue again if planning of the head parking space is not completed within specified time, and re-planning when time is sufficient; or popping up and discarding the head parking space if planning of the head parking space fails. A hash mapping is established between a planning result of each parking space and a parking trajectory based on an identifier of the parking space, and the planning result is stored in the hash storage pool 411 for backup through a connection line numbered 13. The parking trajectory for the parking space may be sent to the parking tracking control module 412, so that the parking tracking control module 412 tracks and controls a vehicle based on the parking trajectory. In addition, the parking trajectory for the parking space may be used for visual display of the HMI display module 409.

The head parking space may be understood as a parking space on the top of a heap, or the head parking space may be understood as a parking space with a high score determined by the preferred parking space evaluation module 402. For example, the preferred priority queue module 404 may sort scores of n idle parking spaces, and select m head parking spaces with top scores from the n idle parking spaces and send the m head parking spaces to the asynchronous linear planning queue module 405.

After planning parking trajectories of the head parking spaces, the asynchronous linear planning queue module 405 may send the parking trajectories of the head parking spaces to the parking space availability evaluation module 406 through a connection line numbered 5.

The parking space availability evaluation module 406 may calculate a parking space availability score based on an available parking trajectory of each parking space in the head parking spaces, and send the parking space availability score to the comprehensive recommendation score calculation module 407 through a connection line numbered 6.

The comprehensive recommendation score calculation module 407 may determine a comprehensive recommendation score of a corresponding parking space based on the score calculated by the preferred parking space evaluation module 402 and the score calculated by the parking space availability evaluation module 406. The comprehensive recommendation score calculation module 407 may send a comprehensive recommendation score of a parking space to the recommendation priority queue module 408 through a connection line numbered 7.

Optionally, the comprehensive recommendation score calculation module 407 may weight the score calculated by the preferred parking space evaluation module 402 and the score calculated by the parking space availability evaluation module 406, to determine a comprehensive recommendation score of a corresponding parking space.

The recommendation priority queue module 408 is a large heap based on a recommendation score. The recommendation priority queue module 408 continuously receives information that includes the recommendation score of the parking space and that is transferred through the connection line numbered 7, and continuously updates the large heap at time complexity of O(log n), where n is a quantity of parking spaces currently in the heap.

In this embodiment of this application, because time consumed when feasible parking trajectory planning is performed by the asynchronous linear planning queue module 405 cannot be ignored, the recommendation priority queue module 408 may be incrementally updated. Therefore, it can be avoided that a recommended parking space in the recommendation priority queue module 408 is determined only after parking trajectories corresponding to all the idle parking spaces are planned. In this way, the cache pool may not be added before the recommendation priority queue module 408 and heap construction may be adjusted at time complexity of O(n).

The HMI display module 409 is read-only to the recommendation priority queue module 408 through a connection line numbered 8, and is responsible for dynamically visualizing a recommended parking space in the recommendation priority queue module 408. The HMI display module 409 may provide a visualized recommended parking space for the user through a connection line numbered 9, to help the user make a parking decision.

The HMI human intent obtaining module 410 may obtain, through a connection line numbered 10, intent information about selecting a recommended parking space by the user, or the HMI human intent obtaining module 410 may obtain an input of selecting a specific idle parking space by the user from idle parking spaces that are not recommended, and send information about the idle parking space selected by the user to the preferred parking space evaluation module 402. A dashed line numbered 11 indicates that the user can intervene in a calculation process of the preferred parking space evaluation module 402. Alternatively, the user may not intervene in a calculation process of the preferred parking space evaluation module 402, but the system 400 automatically completes all the process.

When detecting an operation of selecting a recommended parking space by the user, the HMI human intent obtaining module 410 may send information about the recommended parking space to the hash storage pool 411 through a connection line numbered 12. The hash storage pool 411 may invoke, at time complexity of O(1), a parking trajectory for parking in the recommended parking space, and send the parking trajectory to the parking tracking control module 412 through a connection line numbered 14. The parking tracking control module 412 may control the vehicle to automatically drive into the recommended parking space.

The time complexity of O(1) indicates time consumed from detecting that the user selects the recommended parking space to obtaining the trajectory of the recommended parking space by the hash storage pool 411 through indexing.

Optionally, when a location of the vehicle changes, the system 400 may re-execute the procedure shown in FIG. 4.

In this embodiment of this application, when the location of the vehicle changes, a sensed pose of the idle parking space relative to the vehicle also changes correspondingly. Some parking spaces in the previously determined idle parking space set may exceed a sensing range of the vehicle, a new idle parking space enters the sensing range of the vehicle, and a score obtained through step-by-step calculation may also change. Therefore, for storage life cycles of various storage data structures in this embodiment of this application, when the location of the vehicle changes, data in a related storage structure may be cleared, and the foregoing procedure is performed again after it is detected that the vehicle stops stably.

Optionally, an embodiment of this application further provides an asynchronization mechanism, as shown in a double solid box in FIG. 4. The preferred parking space evaluation module 402, the cache pool 403, the preferred priority queue module 404, the parking space availability evaluation module 406, the comprehensive recommendation score calculation module 407, the recommendation priority queue module 408, and the hash storage pool 411 are all function modules of a main thread, and the main thread is also responsible for receiving a message from another node, sending a message to another node, and running a state machine. The main thread cyclically executes related functional modules at a specific frequency.

For example, the another node includes a node in a robot operating system (robot operating system, ROS).

Optionally, the asynchronous linear planning queue module 405 and the hash storage pool 411 may be located in different queues.

For example, the asynchronous linear planning queue module 405 and the hash storage pool 411 may be respectively located in an asynchronous thread and the main thread. The asynchronous thread and the main thread may belong to a same process. In the main thread, after sequentially popping up parking spaces to the asynchronous linear planning queue module 405 once and for all, the preferred priority queue module 404 can execute other functional modules of the main thread without waiting for a calculation result of the asynchronous thread planning queue module 405 (for example, an available parking trajectory of each parking space obtained through calculation), and only a step of reading the calculation result returned by the asynchronous linear planning queue module 405 into the hash storage pool 411 needs to be added to the main thread that is periodically cyclic (for example, the connection line numbered 13 in FIG. 4).

As shown in a double dashed-line box in FIG. 4, the idle parking space sensing module 401, the HMI display module 409, and the parking tracking control module 412 may respectively have independent processes. These processes generate messages, or perform related processing on received messages, interacts with the main thread described in the foregoing embodiment in a trigger manner.

For example, the idle parking space sensing module 401 may sense information about an objective idle parking space, and then send the information to the main thread for processing each time the main thread cyclically receives data from another node. The main thread assembles some related messages and sends them to another node in each loop. The recommendation priority queue module 408 in the main thread sends information about a recommended parking space to the HMI display module 409 in each loop of the main thread, and the HMI display module 409 displays the information. In a possible implementation, the HMI display module 409 performs re-rendering and drawing only when the information that is about the recommended parking space and that is sent to the HMI display module 409 changes. After a trigger of the user selecting a specific recommended parking space or selecting, by using the vehicle, a specific recommended parking space with a highest comprehensive recommendation score by default is detected, the hash storage pool 411 may send a parking trajectory of the recommended parking space to the parking tracking control module 412 through the main thread. Therefore, the parking tracking control module 412 performs actual parking tracking.

Based on the foregoing asynchronous architecture, relatively time-consuming parking trajectory planning that may cause blocking is placed in another thread, and the main thread asynchronously obtains a planning result of the planning in a non-blocking manner. Such a mechanism can achieve the following technical effect: The recommended parking spaces can be incrementally displayed on an HMI interface. The user can quickly select a recommended parking space through switching without waiting and obtain a visualized result of a parking trajectory of the corresponding parking space. The user can interrupt a process of incremental parking space recommendation at any time and select a specific parking space from recommended parking spaces to park the vehicle immediately without waiting. In the process of incremental parking space recommendation, the user may select a specific idle parking space that has not been recommended, that is, the user may intervene in a calculation process of the preferred parking space evaluation module 402, to trigger incremental re-recommendation at any time.

The foregoing describes, by using the system architecture shown in FIG. 4, a possible implementation of recommending a parking space to the user in this embodiment of this application. The following describes some possible implementations in which the preferred parking space evaluation module 402, the parking space availability evaluation module 406, and the comprehensive recommendation score calculation module 407 in the foregoing embodiments calculate scores.

(A) Calculation process of the preferred parking space evaluation module 402

For a sensed idle parking space, on a premise that the vehicle remains unchanged or a speed of the vehicle is less than a preset speed threshold, there is time required for planning a parking trajectory for each parking space, and planning time required for different parking spaces varies. In consideration of comfort experience of the user, the recommended parking space needs to appear as quickly as possible and be recommended to the user, and use experience of the user needs to be fully considered for the recommended parking space.

Based on the above considerations, a two-step priority queue is designed in the system 400 shown in FIG. 4. The preferred parking space evaluation module 402 gives preliminary scores to idle parking spaces, and assigns a higher score to each of a parking space that requires shorter planning time and a parking space that maximizes user comfort. The preferred parking space evaluation module 402 preferentially places the parking space with a high score in a subsequent planning and recommendation process, to achieve effect of recommending an available comfortable parking space that a high probability of meeting a user requirement can be met as quickly as possible to the user. Otherwise, if a very narrow parking space whose planning time is excessively long or a parking space that is invisible to the user is preferentially used in a subsequent process, poor user experience may be caused. For example, if planning time of a parking space placed in the asynchronous linear planning queue module 405 is excessively long or the planning time exceeds a preset time threshold, the user may not see a recommendation result for long time. Even if several available parking spaces are incrementally recommended, there is a high probability that the user is not satisfied and needs to wait for another recommended parking space to appear.

Optionally, when scoring a preferred parking space, the preferred parking space evaluation module 402 may refer to one or more of the following four evaluation dimensions: a visual feature of an idle parking space relative to a driver, a personalized feature that conforms to a visual habit of the driver, a parking space idleness feature, and a driver intent feature.

a. Visual feature of an idle parking space relative to a driver

For example, the visual feature of the idle parking space relative to the driver may include two dimensions: a visual distance and a visual angle of an intersection point of two diagonal lines of the parking space relative to the driver.

The farther the visual distance is, the more the parking space may be blocked. In addition, from a perspective of a subjective intent, most drivers do not select a parking space with a long visual distance. After all, the vehicle is parked in a current location has been preliminarily screened by driver's sensibility.

The visual angle reflects a natural degree of observing a parking space by the driver. For a parking space with a poor visual angle, the driver sometimes needs to observe the parking space in an extremely unnatural body pose. In addition, a parking space with a good visual feature is within a takeover boundary of the driver, and the driver does not need to spend too much energy on guarding against a sudden appearance of an unknown object.

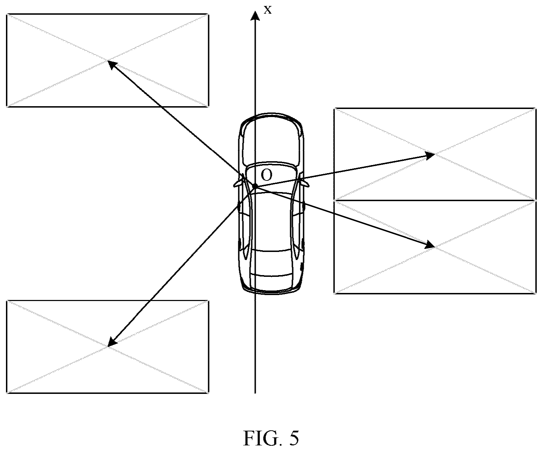

FIG. 5 is a diagram of a visual feature of a driver according to an embodiment of this application. For ease of quantization, a two-dimensional projection on the ground may be used for calculation. As shown in FIG. 5, a point O may be at a center of a driver seat. On the point O, a forward direction parallel to a side edge of a vehicle is a positive direction of an x-axis. A visual vector of each parking space starts from the point O and ends at an intersection point of diagonal lines of the corresponding parking space.

For example, $\vec{t}$ is denoted as a visual vector, and a visual angle $\theta$ and a visual distance L may be calculated according to the following formulas (1) and (2):

$$\theta = \cos^{-1} \frac{\vec{x} \cdot \vec{t}}{|\vec{x}||\vec{t}|} \qquad (1),$$

and

$$L = \left|\vec{t}\right| \qquad (2).$$

For example, the visual angle may be normalized from $[-\pi, \pi)$ to $[0,1)$, a normalized visual angle is $\hat{\theta}$, a normalized visual distance is $\hat{L}$, and $\vec{x}$ may be a sub-vector of $\vec{t}$ on the x-axis. For example, a normalization result obtained when $\vec{t}$ coincides with the positive direction of the x-axis is 1, a normalization result obtained when an included angle between $\vec{t}$ and the positive direction of the x-axis is $\pm 90°$ is 0.5, and a normalization result obtained when the included angle between $\vec{t}$ and the positive direction of the x-axis is $\pm 180°$ is 0.

For example, a visual feature score $s_0$ may be calculated according to the following formulas (3) and (4):

$$s_0 = \alpha \times V(\hat{\theta}) + (1 - \alpha) \times (1 - \hat{L}) \qquad (3),$$

and

$$V(\hat{\theta}) = \begin{cases} 1, 0.5 - \beta < \hat{\theta} < 0.5 + \gamma \\ 0, \hat{\theta} \geq 0.5 + \gamma \ or \ \hat{\theta} \leq 0.5 - \beta \end{cases} \qquad (4).$$

It can be learned that calculation of the visual feature score $s_0$ is related to $\hat{\theta}$ and $\hat{L}$. In a visual angle range determined by $\alpha$, $\beta$, and y, an angle score is 1. Otherwise, the angle score is 0. For $\hat{L}$, it can be learned that a longer distance indicates a smaller contribution of a distance score to $s_0$.

Optionally, values of constants $\alpha$, $\beta$, and y are related to the user, and may be determined based on historical parking data of the user. For example, $\alpha$, $\beta$, and y may be determined based on a sector area in which a parking space selected by the user in a past time period (for example, one month) or in past k (for example, k is 100) parking processes is located, and each sector area may correspond to different $\alpha$, $\beta$, and $\gamma$. $\alpha$, $\beta$, and $\gamma$ in the formulas (3) and (4) may be respectively $\alpha$, $\beta$, and y that are most frequently used in a plurality of sector areas.

The visual feature of the idle parking space relative to the driver may be determined based on the first parking space parameter.

b. Personalized feature that conforms to a visual habit of the driver

For example, the preferred parking space evaluation module 402 may divide a parking space area into a plurality of areas based on the normalized visual angle $\hat{\theta}$. For example, the visual angle $\hat{\theta}$ may be divided into four areas: [0,0.25), [0.25,0.5), [0.5,0.75), and [0.75,1). A score of the personalized feature that reflects the visual habit of the driver is determined based on a frequency that is of selecting parking spaces in the four areas by the user and that is recorded in historical parking data of the user, and is denoted as $s_1$.

Optionally, for a parking space crossing a plurality of areas, an area in which the vehicle is located may be determined based on a projection size of the vehicle in each of the plurality of areas. For example, in a parking process, an area in which the vehicle is parked crosses two areas whose visual angles $\hat{\theta}$ are [0,0.25) and [0.25,0.5), and a projection size of the vehicle in the area whose visual angle $\hat{\theta}$ is [0,0.25) is greater than a projection size of the vehicle in the area

whose visual angle $\hat{\theta}$ is [0.25,0.5). In this case, it may be considered that the area in which the vehicle is located is the area whose visual angle $\hat{\theta}$ is [0,0.25).

The personalized feature that meets the visual habit of the driver may be determined based on the historical parking record of the user.

c. Parking space idleness feature

The parking space idleness determines difficulty of automatic parking planning of the vehicle. In scenarios in which a parking space and surrounding environment are open, planning difficulty is low and planning time is short in most cases. In extreme scenarios in which a parking space or a surrounding environment of the parking space are narrow, planning difficulty is high and corresponding planning time is long. A score of the parking space idleness feature is denoted as $s_2$. Based on the foregoing analysis, the preferred parking space evaluation module 402 may establish a method for evaluating the parking space idleness feature, to effectively predict time required for parking planning.

For example, based on quick planning of parking in a to-be-evaluated parking space, a planning algorithm that is simple and low-cost, or does not go through optimization steps is selected, to quickly plan a rough parking trajectory in short time. If the planning is not performed within a specified short time threshold or the planning fails, $s_2$ is set to 0. Alternatively, a planned ego-vehicle pose is obtained through even sampling in each gear based on the parking trajectory, and extension is performed outward from an ego-vehicle boundary corresponding to the sampled ego-vehicle pose until a specific distance to a boundary of the obstacle in a direction perpendicular to the boundary starting. For example, outside the parking space, extension may be performed until a surface of an obstacle. Inside the parking space, for safety of the ego vehicle and another vehicle, semantic information of adjacent parking space occupation or an obstacle is taken into consideration. If there is another vehicle in an adjacent parking space, extension is performed until a first distance threshold to a surface of the another vehicle. Alternatively, if there is a non-vehicle obstacle in an adjacent parking space, extension is performed until a second distance threshold to a surface of the obstacle. The first distance threshold may be greater than the second distance threshold. A corresponding extension width may be obtained for each planned point sampled by the preferred parking space evaluation module 402, and an average value of extension widths of all sampled points is obtained and normalized, to obtain the score $s_2$ of parking space idleness.

The parking space idleness feature may be determined based on the second parking space parameter.

d. Driver intent feature

Optionally, the driver may participate in a calculation process of the preferred parking space evaluation module 402, and a score of the driver intent feature is denoted as $s_3$. The driver may select one or more parking spaces as desired, indicating that the driver expects the preferred parking space evaluation module 402 to preferentially recommend a selected parking space and a surrounding parking space close to the selected parking space. A calculation manner of $s_3$ may be as follows: For a parking space selected by the driver, a score is 1. A diagonal intersection point of the parking space represents the parking space, and scores $s_3$ of remaining parking spaces may be a normalized result of a distance closest to the selected parking space.

Based on the foregoing four evaluation dimensions, there are the following two manners for calculating a score of a preferred parking space. The score of a preferred parking space output by the preferred parking space evaluation module 402 is denoted as $s_{sum,1}$.

Manner 1: Automatic evaluation

This evaluation manner does not require participation of the user, and $s_{sum,1}$ may be calculated according to the following formula (5):

$$s_{sum,1} = \omega_0 s_0 + \omega_1 s_1 + \omega_2 s_2 \qquad (5),$$

where

$\omega_0$, $\omega_1$, and $\omega_2$ are respectively weights corresponding to the visual feature of the idle parking space relative to the driver, the personalized feature that conforms to the visual habit of the driver, and the parking space idleness feature.

Optionally, $\omega_0$, $\omega_1$, and $\omega_2$ may be preset values (for example, 0.4, 0.3, and 0.3 respectively), or $\omega_0$, $\omega_1$, and $\omega_2$ may be obtained through calibration in actual application.

Manner 2: Semi-automatic evaluation

This manner requires participation of the user. Considering that the user directly selects a preferred recommended parking space, $s_0$ and $s_1$ are meaningless. In this manner, a comprehensive evaluation may be performed by using scores of $s_2$ and $s_3$. For example, $s_{sum,1}$ may be calculated according to the following formula (6):

$$s_{sum,1} = \omega_3 s_2 + \omega_4 s_3 \qquad (6),$$

where
$\omega_3$ and $\omega_4$ are respectively weights corresponding to the parking space idleness feature and the driver intent feature.
Optionally, $\omega_3$ and $\omega_4$ may be preset values (for example, 0.4 and 0.6 respectively), or $\omega_3$ and $\omega_4$ may be obtained through calibration in actual application.
Optionally, $\omega_4$ may be greater than $\omega_3$. For an intended parking space of the user, it is also acceptable for the user to wait for more time to obtain recommendation of a desired parking space.

(B) Calculation process of the parking space availability evaluation module 406

As shown by the connection line numbered 5 in FIG. 4, an input of the parking space availability evaluation module 406 is an output of the asynchronous linear planning queue module 405. The output of the asynchronous linear planning queue module 405 is a parking trajectory that can be directly delivered to the control for tracking control. Therefore, the parking space availability evaluation module 406 is based on the parking trajectory. In addition, because calculation is performed based on the parking trajectory for direct tracking control, the parking space availability evaluation module 406 accurately evaluates parking space availability.
Optionally, when scoring the parking space availability, the parking space availability evaluation module 406 may refer to one or more of the following three evaluation dimensions: a quantity of parking gear shift times, a parking risk, and parking time.

a. A quantity of parking gear shift times

The quantity of parking gear shift times is a quantity of times that a D gear and an R gear alternate in an available parking trajectory planned by the asynchronous linear planning queue module 405. In an entire parking process, a larger quantity of gear shift times indicates poorer user experience. For example, a quantity of gear shift times obtained after quantities of gear shift times of a plurality of idle parking spaces are normalized is denoted as g, and a score $s_4$ of the quantity of parking gear shift times may be calculated according to the following formula (7):

$$s_4 = 1 - g \quad (7).$$

It can be learned that a larger quantity of parking gear shift times indicates a smaller score.

b. Parking risk

The parking risk item evaluates a collision risk between a planned parking trajectory and an obstacle in the entire process.
For example, a score of the parking risk is denoted as $s_5$, a minimum normalized distance between the vehicle and the obstacle in the entire planned parking trajectory is d, and the score $s_5$ of the parking risk may be calculated according to a formula (8):

$$s_5 = d \quad (8).$$

It can be learned that a larger distance between the vehicle and the obstacle in the parking trajectory indicates a lower parking risk and a higher score.

c. Parking time

The parking time item evaluates time required to track the planned parking trajectory. The required time is determined based on both a length of the entire parking trajectory and a speed planning result during vehicle parking. The calculation is performed based on an actual available parking trajectory.

For example, parking time obtained after parking time corresponding to the plurality of idle parking spaces is normalized is denoted as t, and a score $s_6$ of the parking time may be calculated according to a formula (9):

$$s_6 = 1 - t \quad (9).$$

It can be learned that longer parking time indicates a smaller score of the parking time item.

For example, based on the foregoing evaluation dimensions, a score of parking space availability evaluation is denoted as $s_{sum,2}$, and a calculation manner of the score of parking space availability evaluation may be determined by using the following formula (10):

$$s_{sum,2} = \omega_5 s_4 + \omega_6 s_5 + \omega_7 s_6 \quad (10),$$

where

$\omega_5$, $\omega_6$, and $\omega_7$ are respectively weights corresponding to the score of the quantity of parking gear shift times, the score of the parking risk, and the score of the parking time.

Optionally, $\omega_5$, $\omega_6$, and $\omega_7$ may be preset values (for example, 0.4, 0.3, and 0.3 respectively), or $\omega_5$, $\omega_6$, and $\omega_7$ may be obtained through calibration in actual application.

(C) Calculation process of the comprehensive recommendation score calculation module 407

After the score $s_{sum,1}$ of preferred parking space evaluation and the score $s_{sum,2}$ of parking space availability evaluation are calculated, a final recommended score $s_{sum}$ of the parking space recommended to the user may be calculated according to the following formula (11):

$$s_{sum} = \omega_{sum,1} s_{sum,1} + \omega_{sum,2} s_{sum,2} \quad (11),$$

where

$\omega_{sum,1}$ and $\omega_{sum,2}$ are respectively weights corresponding to the score $s_{sum,1}$ of preferred parking space evaluation and the score $s_{sum,2}$ of parking space availability evaluation.

Optionally, $\omega_{sum,1}$ and $\omega_{sum,2}$ may be preset values (for example, 0.3 and 0.7 respectively), or $\omega_{sum,1}$ and $\omega_{sum,2}$ may be obtained through calibration in actual application.

After the calculation of $s_{sum}$ is completed, a parking space recommendation priority queue may be incrementally updated through the connection line numbered 7 shown in FIG. 4.

Optionally, in consideration of an external display feature of the recommended parking space and user experience, the HMI display module 409 may display a plurality of types of parking spaces: an idle parking space, incrementally recommended parking spaces, a parking space selected by the user from recommended parking spaces, and a parking space selected by the user from non-recommended and idle parking spaces. These parking spaces may be distinguished by color.

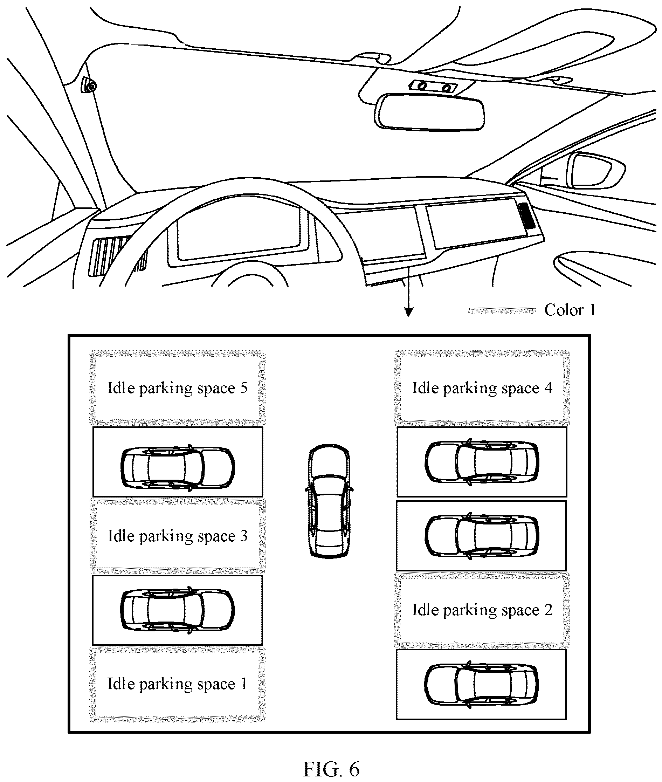

For example, FIG. 6 shows an HMI according to an embodiment of this application. For idle parking spaces 1 to 5 sensed by the idle parking space sensing module 401, a visualization color of the idle parking spaces 1 to 5 is a color 1. When the vehicle just stops, information about the idle parking spaces 1 to 5 may be obtained by using the idle parking space sensing module 401, and the information is displayed in the color 1 on a display.

For incrementally recommended parking spaces, it can be learned from the foregoing embodiment that a quantity of recommended parking spaces obtained by the recommendation priority queue module 408 is increasing, and the recommended parking spaces appear incrementally. The HMI display module 409 may periodically read the recommended parking spaces and priorities of the recommended parking spaces in the recommendation priority queue module 408, and perform incremental visualization when the recommended parking space changes. In the visualization manner, the recommended parking spaces may be popped out one by one based on the priorities of the copied recommended parking spaces, and the parking spaces are visualized according to a popped-out sequence in a manner in which the priorities can be intuitively represented (a visualization color of the parking spaces is a color 2 and priority numbers are supplemented).

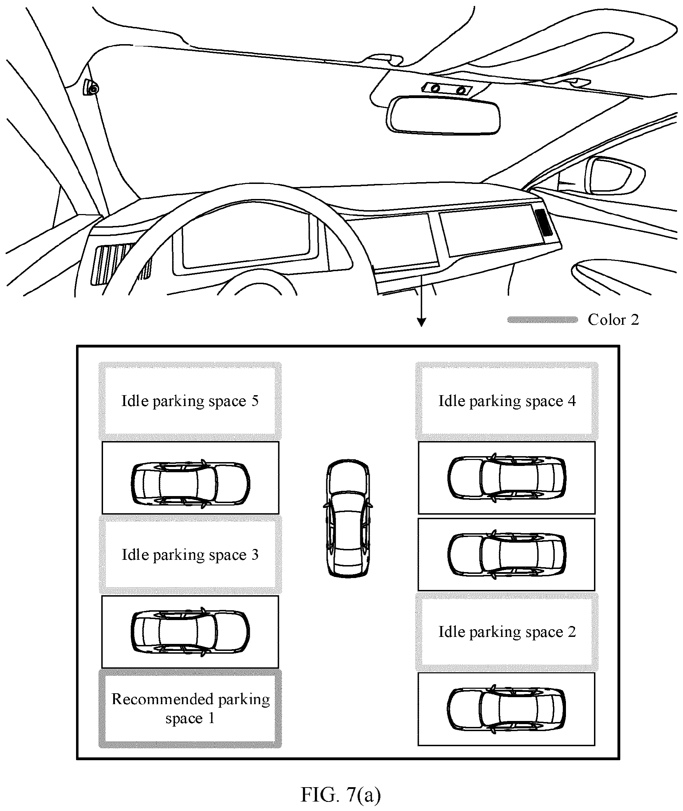

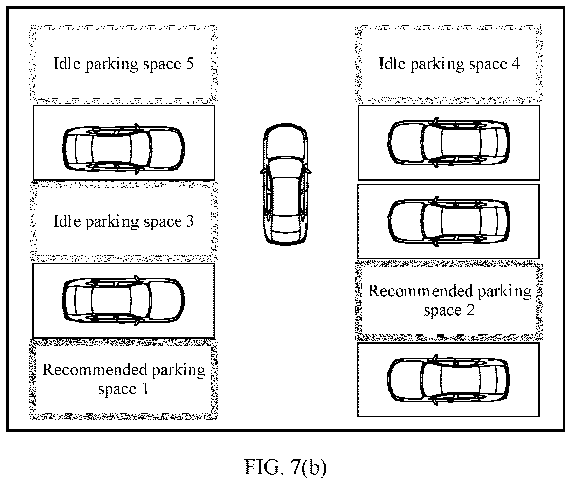

For example, FIG. 7(a) and FIG. 7(b) show a group of HMIs according to an embodiment of this application.

According to the HMI shown in FIG. 7(a), at a moment $T_1$, the preferred parking space evaluation module 402 obtains, through calculation, scores of preferred parking spaces of an idle parking space 1, an idle parking space 2, an idle parking space 3, an idle parking space 4, and an idle parking space 5. The preferred parking space evaluation module 402 may send the calculated scores of preferred parking spaces of the idle parking spaces to the cache pool 403, and the cache pool 403 caches the scores of preferred parking spaces. After caching is completed, the cache pool 403 may send the scores of preferred parking spaces of the parking spaces to the preferred priority queue module 404 once and for all. The preferred priority queue module 404 may sort the scores of preferred parking spaces of the idle parking spaces 1 to 5, to determine that the scores of preferred parking spaces of the idle parking space 1, the idle parking space 2, the idle parking space 3, the idle parking space 4, and the idle parking space 5 decrease in sequence. The preferred priority queue module 404 may send information about each sorted idle parking space to the asynchronous linear planning queue module 405. The asynchronous linear planning queue module 405 may sequentially plan available parking trajectories of the idle parking space 1, the idle parking space 2, the idle parking space 3, the idle parking space 4, and the idle parking space 5. After the asynchronous linear planning queue module 405 obtains the available parking trajectory of the idle parking space 1 through planning, the parking space availability evaluation module 406 may obtain, through calculation, a score of parking availability evaluation corresponding to the idle parking space 1. The comprehensive recommendation score calculation module 407 may send a comprehensive recommendation score of the idle parking space 1 to the recommendation priority queue module 408 after obtaining the comprehensive recommendation score of the idle parking space 1 through calculation based on the score of the preferred parking space and the score of parking availability evaluation that are of the idle parking space 1. In this case, the recommendation priority queue module 408 stores only the comprehensive recommendation score of the idle parking space 1. Therefore, after the HMI display module 409 (or a vehicle-mounted display) reads information stored in the recommendation priority queue module 408, a color of the idle parking space 1 may be adjusted from the color 1 to the color 2, and the "idle parking space 1" is updated to a "recommended parking space 1".

According to the HMI shown in FIG. 7(b), at a moment $T_2$ after the moment $T_1$, after the asynchronous linear planning queue module 405 obtains an available parking trajectory of the idle parking space 2 through planning, the parking space availability evaluation module 406 may obtain, through calculation, a score of parking availability evaluation corresponding to the idle parking space 2. The comprehensive recommendation score calculation module 407 may send a comprehensive recommendation score of the idle parking space 2 to the recommendation priority queue module 408 after obtaining the comprehensive recommendation score of the idle parking space 2 through calculation based on the score of the preferred parking space and the score of the parking availability evaluation that are of the idle parking space 2. In this case, the recommendation priority queue module 408 stores the comprehensive recommendation scores of the idle parking space 1 and the idle parking space 2. In this case, after the HMI display module 409 (or the vehicle-mounted display) reads information stored in the recommendation priority queue module 408, a color of the idle parking space 2 may be adjusted from the color 1 to the color 2, and the "idle parking space 2" is updated to a "recommended parking space 2".

In an embodiment, recommendation priorities of the recommended parking space 1 and the recommended parking space 2 may be further displayed in FIG. 7(b). For example, when the comprehensive recommendation score corresponding to the idle parking space 1 is greater than the comprehensive recommendation score of the idle parking space 2, the "idle parking space 2" shown in FIG. 7(a) is updated to the "recommended parking space 2", to indicate that a recommendation priority of the idle parking space 1 is higher than that of the idle parking space 2. For another example, when the comprehensive recommendation score corresponding to the idle parking space 2 is greater than the comprehensive recommendation score of the idle parking space 1, the HMI display module 409 may update the "idle parking space 2" shown in FIG. 7(a) to the "recommended parking space 1", and update the "recommended parking space 1" to the "recommended parking space 2", to indicate that a recommendation priority of the idle parking space 2 is higher than that of the idle parking space 1.

For a parking space selected by the user from non-recommended and idle parking spaces, a visualization color of the parking space is a color 3. When it is detected that the user selects such a parking space, it may be determined that the user participates in evaluation of the preferred parking space. As described in the foregoing embodiment, this helps avoid a waste of computing resources in an area unexpected by the user.

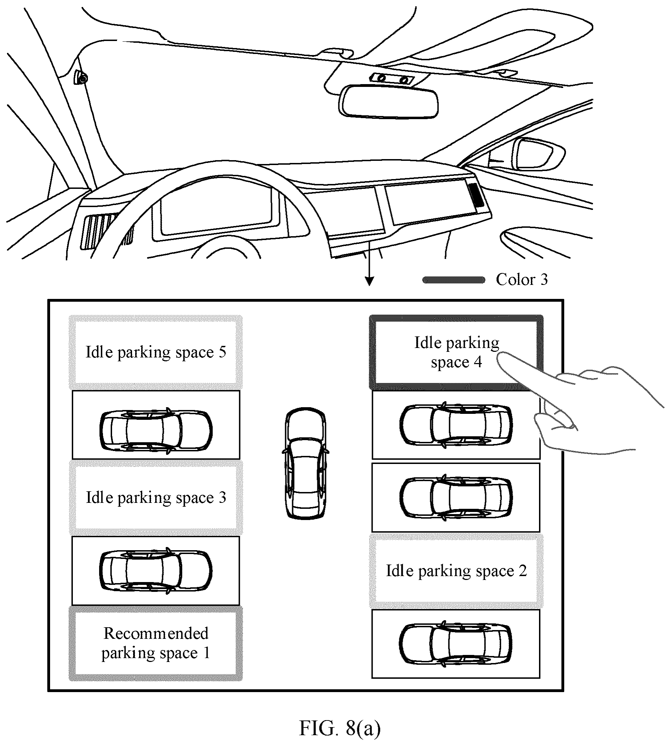

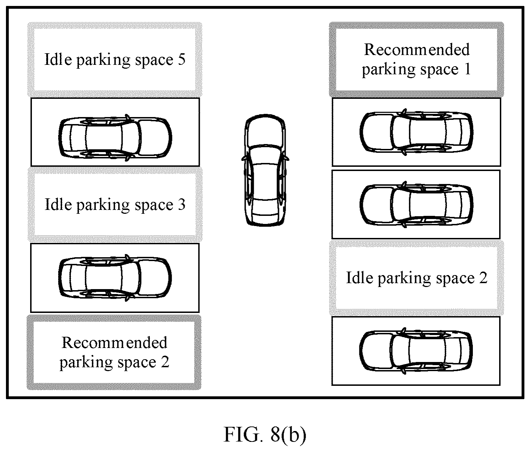

For example, FIG. 8(a) and FIG. 8(b) show another group of HMIs according to an embodiment of this application.

As shown in FIG. 8(a), when an operation of selecting the idle parking space 4 by the user is detected, a color of the idle parking space 4 is updated from the color 1 to the color 3. In addition, the system 400 may empty the cache pool 403 and the preferred priority queue module 404. The preferred parking space evaluation module 402 may recalculate scores of preferred parking spaces of a plurality of idle parking spaces based on an intent of the user (for example, recalculate the scores of preferred parking spaces of the plurality of idle parking spaces according to the foregoing formula (6)). For example, the preferred parking space evaluation module 402 obtains the scores of preferred parking spaces of the idle parking spaces 1 to 5 through recalculation. The preferred parking space evaluation module 402 may send the recalculated scores of preferred parking spaces of the idle parking spaces to the cache pool 403, and the cache pool 403 caches the scores of preferred parking spaces. After the caching is completed, the cache pool 403 may send the scores of preferred parking spaces of the idle parking spaces to the preferred priority queue module 404 once and for all. The preferred priority queue module 404 may sort the scores of preferred parking spaces of the idle parking spaces 1 to 5, to determine that the scores of preferred parking spaces of the idle parking space 4, the idle parking space 5, the idle parking space 3, the idle parking space 2, and the idle parking space 1 decrease in sequence. The preferred priority queue module 404 may send information about each re-sorted idle parking space to the asynchronous linear planning queue module 405.

As shown in FIG. 8(b), after the asynchronous linear planning queue module 405 receives the information that is about the re-sorted parking spaces and that is sent by the preferred priority queue module 404, because the available parking trajectory of the idle parking space 1 has been obtained through planning, available parking trajectories of the idle parking space 4, the idle parking space 5, the idle parking space 3, and the idle parking space 2 may be sequentially planned. For example, after the available parking trajectory of the idle parking space 4 is obtained through planning, a comprehensive recommendation score of the idle parking space 4 may be obtained through calculation. When the comprehensive recommendation score of the idle parking space 4 is greater than the comprehensive recommendation score of the idle parking space 1, the HMI display module 409 may update the "idle parking space 4" shown in FIG. 8(a) to the "recommended parking space 1", and update the "recommended parking space 1" to the "recommended parking space 2", to indicate that a recommendation priority of the idle parking space 4 is higher than that of the idle parking space 1.

For a parking space selected by the user from recommended parking spaces, a visualization color of the parking space is a color 4. When detecting an operation of selecting a specific parking space from the recommended parking spaces by the user, the vehicle may control the HMI display module 409 to visualize an available parking trajectory of the corresponding parking space in the color 4. For this type of parking space, the user can directly park the vehicle without waiting after selecting and confirming the parking space. There is no case in which the user is prompted to select another parking space after the parking space is selected and then planning fails. In addition, the user can quickly switch and select between such parking spaces without waiting, and observe an available parking trajectory of each parking space visualized by the HMI in a switching and selection process, to assist the user in selecting a parking space.

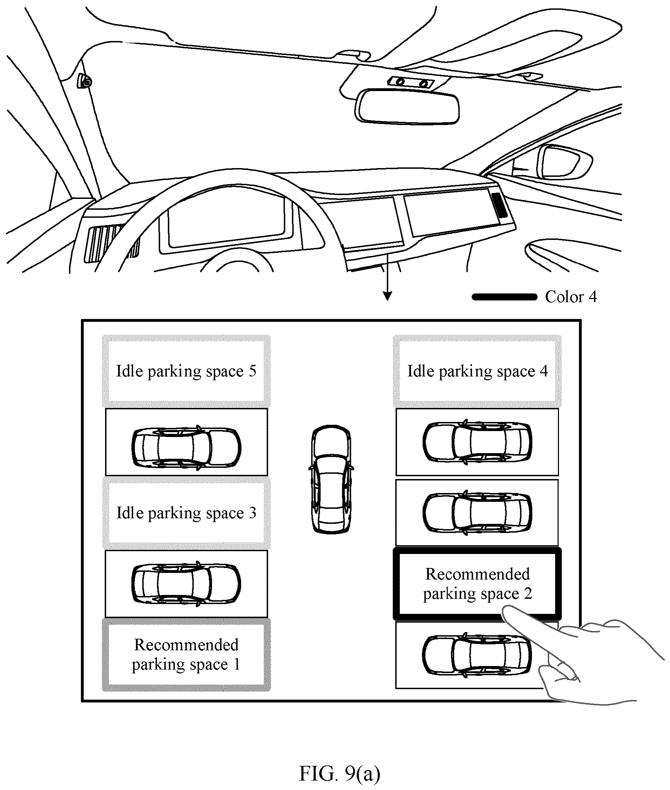

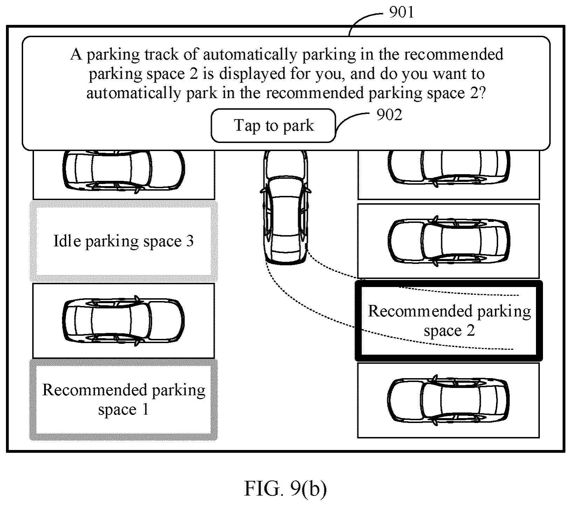

For example, FIG. 9(a) and FIG. 9(b) show another group of HMIs according to an embodiment of this application.

As shown in FIG. 9(a), when an operation of tapping the recommended parking space 2 by the user is detected, a color of the recommended parking space 2 may be updated from the color 2 to the color 4, and an HMI interface shown in FIG. 9(b) is displayed.

As shown in FIG. 9(b), the HMI interface includes a prompt box 901, and the prompt box 901 includes prompt information "A parking trajectory of automatically parking in the recommended parking space 2 is displayed for you, and do you want to automatically park in the recommended parking space 2?" and a tap to park control 902.

In an entire parking space recommendation process, according to the process described in the foregoing embodiment, for a specific parking space, a visualization color may have the following several modes over time.

(1) Color 1-color 2-color 4: The user does not participate in evaluation of the preferred parking space, and the user selects a specific recommended parking space after the HMI display module 409 displays recommended parking spaces.
(2) Color 1-color 3-color 2-color 4: The user participates in evaluation of the preferred parking space, and the user selects a specific recommended parking space after the HMI display module 409 displays recommended parking spaces.
(3) Color 1-color 2: The user does not participate in evaluation of the preferred parking space, and the user does not select any recommended parking space after the HMI display module 409 displays recommended parking spaces.
(4) Color 1-color 3-color 2: The user participates in evaluation of the preferred parking space, and the user does not select any recommended parking space after the HMI display module 409 displays recommended parking spaces.
(5) Color 1: Planning of idle parking spaces fails and the idle parking spaces are not recommended.
(6) Color 1-color 3-color 1: The user participates in evaluation of the preferred parking space, but planning of idle parking spaces fails and the idle parking spaces are not recommended.
(7) Color 1-Color 3-Color 2-Color 4-Color 2-Color 4: The user participates in evaluation of the preferred parking space and switches to the recommended parking space.
(8) Color 1-color 2-color 4-color 2-color 4: The user does not participate in evaluation of the preferred parking space and switches to the recommended parking space.

In an embodiment, in the entire parking space recommendation, the user may intervene in two places: one is in the evaluation of the preferred parking space, and the other is a place in which a final parking space is selected and confirmed from recommended parking spaces. The following describes a process in which the user participates in the entire process with reference to an embodiment.

The user participates in evaluation of the preferred parking space.

Before it is detected that the vehicle stops and the user intervenes in the evaluation of the preferred parking space, the preferred parking space evaluation module 402 may perform automatic evaluation based on $s_0$, $s_1$, and $s_2$ that are obtained through calculation in the foregoing embodiment, and perform a subsequent recommendation procedure. A user intervention time period may be before recommendation calculation performed on all idle parking spaces. Otherwise, if recommended parking spaces are obtained through calculation, the user may directly select a parking space for parking, and there is no meaning of participating in the evaluation of the preferred parking space.

When it is detected that the user selects one or more parking spaces from the idle parking spaces, the one or more parking spaces may be used as driver's intended parking spaces. After the user selects the intended parking space, as shown in FIG. 4, the system 400 may retain parking trajectory data planned in the hash storage pool 411, clear a cache pool and a preferred priority queue, and interrupt planning of the parking trajectory by the asynchronous linear planning queue module 405. Based on the foregoing embodiment, the cache pool and the preferred priority queue are re-filled in the semi-automatic evaluation manner by using $s_2$ and $s_3$, and corresponding parking spaces and preferred evaluation scores of the parking spaces are sequentially placed in the asynchronous linear planning queue module 405.

If a planning result of a specific parking space received by the asynchronous linear planning queue module 405 from the preferred priority queue module 404 already exists, it means that the parking space has been processed in the previous recommendation process. The available parking trajectory that corresponds to the parking space and that is stored in the hash storage pool 411 may be directly used without re-planning. In addition, the parking space is directly popped out and discarded (or the parking space is discarded from the asynchronous linear planning queue module 405). Otherwise, if the parking space is not found in the hash storage pool 411, time needs to be consumed for planning, and a parking trajectory that is of the parking space and that is obtained through planning is sent to the parking space availability evaluation module 406.

Before a new parking space arrives, the parking space is already in a recommendation priority. A comprehensive recommendation score may be recalculated based on a recalculated preferred parking space evaluation score and a reserved parking availability score, and a recommendation priority queue is adjusted based on the recalculated comprehensive recommendation score. A parking trajectory corresponding to the new parking space popped up from the asynchronous linear planning queue module 405 may be placed in a subsequent module according to a normal procedure.

Optionally, before recommendation calculation is completed for all idle parking spaces, the foregoing process of participating in evaluation of the preferred parking space may be performed a plurality of times. Such a mechanism may be summarized as incremental re-recommendation. This helps avoid a waste of computing resources in a parking space area that is not expected by the user, and further improves parking experience of the user.

The user participates in selection of a recommended parking space.

In recommended parking spaces visualized by the HMI display module 409, the user may select any recommended parking space based on visualized information to perform final auto parking. The visualized information includes priority information of each recommended parking space and parking trajectory information of a parking space in a case in which the user selects the recommended parking space from the recommended parking spaces and does not click to confirm parking. The user may randomly switch between the recommended parking spaces for selecting, and finally select a recommended parking space.

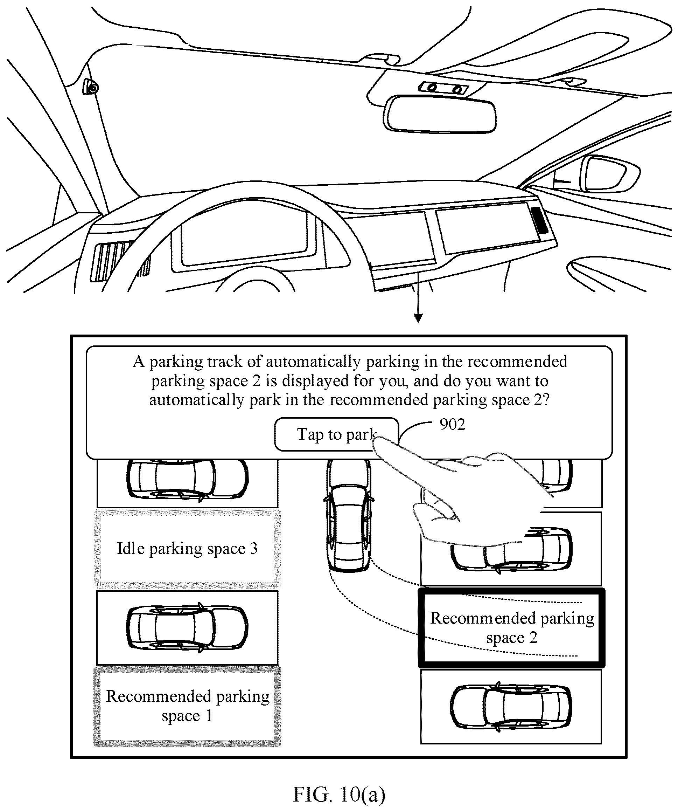

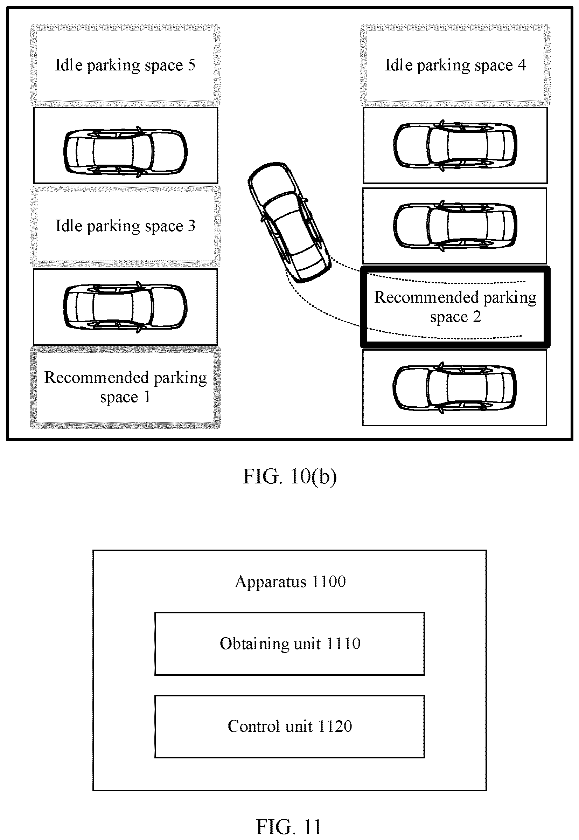

For example, FIG. 10(a) and FIG. 10(b) show another group of HMIs according to an embodiment of this application.

As described in FIG. 10(a) and FIG. 10(b), when detecting an operation that the user selects the recommended parking space 2 and taps the control 902, the system 400 may control a vehicle to automatically park in the recommended parking space 2.

In an embodiment, the user may not participate in an entire parking space recommendation process. To be specific, full automation is performed for parking. The user may not participate in a preferred parking space evaluation process or a recommended parking space selection process. After recommendation calculation is performed on all idle parking spaces and is visualized on the HMI interface, if no operation of selecting a recommended parking space by the user is detected after a time threshold (for example, 20 seconds), the system 400 selects a parking space with a highest recommendation score for auto parking. For a common parking area of the user, for example, a fixed parking space selected after the user arrives at home, the time threshold may be appropriately reduced, so that the user can automatically park in the common area without waiting too much. This further improves user experience.

FIG. 11 is a block diagram of a control apparatus 1100 according to an embodiment of this application. As shown in FIG. 11, the control apparatus 1100 includes: an obtaining unit 1110, configured to obtain a first idle parking space set, where the first idle parking space set includes a first idle parking space and a second idle parking space; and a control unit 1120, configured to: when the obtaining unit obtains a first parking trajectory, control a display apparatus to display a first recommended parking space set, where the first recommended parking space set includes the first idle parking space, and the first parking trajectory is a trajectory of parking a vehicle in the first idle parking space. The control unit 1120 is further configured to: when the obtaining unit obtains a second parking trajectory, control the display apparatus to switch from displaying the first recommended parking space set to displaying a second recommended parking space set, where the second recommended parking space set includes the first idle parking space and the second idle parking space, and the second parking trajectory is a trajectory of parking the vehicle in the second idle parking space.

Optionally, the apparatus 1100 further includes: a first determining unit, configured to determine priority information based on at least one of a first parking space parameter, a second parking space parameter, and a historical parking record of a user. The priority information indicates that the priority of obtaining the first parking trajectory is higher than the priority of obtaining the second parking trajectory; and the first parking space parameter includes a pose of the first idle parking space relative to the vehicle and a pose of the second idle parking space relative to the vehicle, and the second parking space parameter includes information about an obstacle around the first idle parking space and information about an obstacle around the second idle parking space.

Optionally, the control unit 1120 is further configured to: control, based on the priority information, the first parking trajectory, and the second parking trajectory, the display apparatus to display recommendation priorities of the first idle parking space and the second idle parking space.

Optionally, the apparatus 1100 further includes: a second determining unit, configured to determine a parking parameter based on the first parking trajectory and the second parking trajectory, where the parking parameter includes at least one of a quantity of gear shift times, a parking risk, and parking time for parking the vehicle in each of the first idle parking space and the second idle parking space. The control unit 1120 is configured to control, based on the priority information and the parking parameter, the display apparatus to display the recommendation priorities of the first idle parking space and the second idle parking space.

Optionally, the recommendation priority of the first idle parking space is higher than the recommendation priority of the second idle parking space, and the apparatus 1100 further includes a detection unit. The control unit 1120 is configured to: when the detection unit does not detect, within preset duration, an operation of selecting, by the user, a parking space from the second recommended parking space set, control the vehicle to automatically drive into the first idle parking space.

Optionally, the apparatus 1100 further includes a detection unit, and the control unit 1120 is configured to: when the detection unit detects an input of selecting, by the user, the first idle parking space from the second recommended parking space set, control the display apparatus to display the first parking trajectory and prompt the user whether to park in the first idle parking space; and when the detection unit detects an input of determining, by the user, to park in the first idle parking space, control, based on the first parking trajectory, the vehicle to drive into the first idle parking space.

Optionally, the first idle parking space set further includes a third idle parking space, and the obtaining unit 1110 is further configured to: obtain a third parking trajectory when the detection unit detects that the user selects the third idle parking space, where the third parking trajectory is a trajectory of parking the vehicle in the third idle parking space. The control unit 1120 is further configured to control the display apparatus to switch from displaying the second recommended parking space set to displaying a third recommended parking space set, where the third recommended parking space set includes the third idle parking space.

Optionally, the control unit 1120 is further configured to control the display apparatus to display the first idle parking space set.

Optionally, the apparatus 1100 further includes: a third determining unit, configured to: before the obtaining unit obtains the first idle parking space set, determine that a speed of the vehicle is less than or equal to a preset speed threshold.

For example, the obtaining unit 1110 may be the computing platform in FIG. 1, or a processing circuit, a processor, or a controller on the computing platform in FIG. 1. For example, the obtaining unit 1110 is the processor 151 on the computing platform. The processor 151 may obtain data collected by one or more sensors, and determine, based on the data, the first idle parking space set in which parking spaces are around the vehicle.

For another example, the control unit 1120 may be the computing platform in FIG. 1, or a processing circuit, a processor, or a controller on the computing platform in FIG. 1. For example, the control unit 1120 is the processor 152 on the computing platform. The processor 152 may first obtain the first parking trajectory based on the first idle parking space set determined by the processor 151, and when obtaining the first parking trajectory, control the display apparatus to display the first recommended parking space set; and then, obtain the second parking trajectory, and when obtaining the second parking trajectory, control the display apparatus to switch from displaying the first recommended parking space set to displaying the second recommended parking space set; or when obtaining the second parking trajectory, display recommended parking spaces in an incremental manner.

A function implemented by the obtaining unit 1110 and a function implemented by the control unit 1120 may be implemented by different processors, or may be implemented by a same processor. This is not limited in this embodiment of this application.

It should be understood that division of the units in the foregoing apparatus is merely logical function division. During actual implementation, all or some of the units may be integrated into one physical entity, or may be physically separated. In addition, the units in the apparatus may be implemented in a form in which a processor invokes software. For example, the apparatus includes a processor, the processor is connected to a memory, the memory stores instructions, and the processor invokes the instructions stored in the memory, to implement any one of the foregoing methods or implement functions of units of the apparatus. The processor is a general-purpose processor, for example, a CPU or a microprocessor, and the memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an ASIC, and the functions of some or all of the foregoing units are implemented by designing a logical relationship between elements in the circuit. For another example, in another implementation, the hardware circuit may be implemented by using a PLD. An FPGA is used as an example, and the field programmable gate array may include a large quantity of logic gate circuits. A configuration file is used to configure a connection relationship between logic gate circuits, to implement functions of some or all of the foregoing units. All units of the foregoing apparatus may be implemented in a form in which a processor invokes software, or implemented in a form of a hardware circuit, or some units of the foregoing apparatus may be implemented in a form in which a processor invokes software, and implemented in a form of a hardware circuit.

The unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated together, or may be implemented independently. In an implementation, these units are integrated together and implemented in a form of a SoC. The SoC may include at least one processor, configured to implement any one of the foregoing methods or implement functions of the units in the apparatus. Types of the at least one processor may be different, for example, including a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, so that the apparatus performs the methods or the steps performed in the foregoing embodiments.

Optionally, if the apparatus is located in a vehicle, the processing unit may be the processors 151 to 15n shown in FIG. 1.

An embodiment of this application further provides a control system. The path planning system includes one or more sensors and a computing platform. The computing platform includes the apparatus 1100.

For example, the one or more sensors may be located in a vehicle, and the computing platform may be located in a cloud server or the vehicle.

An embodiment of this application further provides a vehicle. The vehicle may include the apparatus 1100 or the foregoing control system.

An embodiment of this application further provides a server. The server may include the apparatus 1100.

An embodiment of this application further provides a mobile terminal. The server may include the foregoing apparatus 1100.

For example, the mobile terminal may be a mobile phone. A user may choose to park a vehicle in a corresponding recommended parking space based on information about recommended parking spaces displayed on the mobile phone. For example, after detecting that the user selects a recommended parking space and determines to park in the recommended parking space, the mobile phone may send information about the recommended parking space to the vehicle, so that the vehicle can control, based on a parking trajectory corresponding to the recommended parking space, the vehicle to park in the recommended parking space.

An embodiment of this application further provides a computer program product. The computer program product includes computer program code. When the computer program code is run on a computer, the computer is enabled to perform the foregoing method.

An embodiment of this application further provides a computer-readable medium. The computer-readable medium stores program code. When the computer program code is run on a computer, the computer is enabled to perform the foregoing method.

In an implementation process, the steps in the foregoing methods can be completed by using an integrated logical circuit of hardware in the processor, or by using instructions in a form of software. The method of the communication disclosed with reference to embodiments of this application may be directly performed by a hardware processor, or may be performed by using a combination of hardware in a processor and a software module. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should also be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some ports. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, part contributing to the conventional technology, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control method, comprising:

    obtaining a first idle parking space set, wherein the first idle parking space set comprises a first idle parking space and a second idle parking space;
    when a first parking trajectory is obtained, controlling a display apparatus to display a first recommended parking space set, wherein the first recommended parking space set comprises the first idle parking space, and the first parking trajectory is a trajectory of parking a vehicle in the first idle parking space; and
    when a second parking trajectory is obtained, controlling the display apparatus to switch from displaying the first recommended parking space set to displaying a second recommended parking space set, wherein the second recommended parking space set comprises the first idle parking space and the second idle parking space, and the second parking trajectory is a trajectory of parking the vehicle in the second idle parking space.

2. The method according to claim 1, wherein the method further comprises:

    determining priority information based on at least one of a first parking space parameter, a second parking space parameter, and a historical parking record of a user, wherein the priority information indicates that a priority of obtaining the first parking trajectory is higher than a priority of obtaining the second parking trajectory; and
    the first parking space parameter comprises a pose of the first idle parking space relative to the vehicle and a pose of the second idle parking space relative to the vehicle, and the second parking space parameter comprises information about an obstacle around the first idle parking space and information about an obstacle around the second idle parking space.

3. The method according to claim 2, wherein the method further comprises:
controlling, based on the priority information, the first parking trajectory, and the second parking trajectory, the display apparatus to display recommendation priorities of the first idle parking space and the second idle parking space.

4. The method according to claim 3, wherein the controlling, based on the priority information, the first parking trajectory, and the second parking trajectory, the display apparatus to display recommendation priorities of the first idle parking space and the second idle parking space comprises:

determining a parking parameter based on the first parking trajectory and the second parking trajectory, wherein the parking parameter comprises at least one of a quantity of gear shift times, a parking risk, and parking time for parking the vehicle in each of the first idle parking space and the second idle parking space; and
controlling, based on the priority information and the parking parameter, the display apparatus to display the recommendation priorities of the first idle parking space and the second idle parking space.

5. The method according to claim 3 or 4, wherein the recommendation priority of the first idle parking space is higher than the recommendation priority of the second idle parking space, and the method further comprises:
when an operation of selecting, by the user, a parking space from the second recommended parking space set is not detected within preset duration, controlling the vehicle to automatically drive into the first idle parking space.

6. The method according to any one of claims 1 to 4, wherein the method further comprises:

when an input of selecting, by the user, the first idle parking space from the second recommended parking space set is detected, controlling the display apparatus to display the first parking trajectory and prompt the user whether to park in the first idle parking space; and
when an input of determining, by the user, to park in the first idle parking space is detected, controlling, based on the first parking trajectory, the vehicle to drive into the first idle parking space.

7. The method according to any one of claims 1 to 6, wherein the first idle parking space set further comprises a third idle parking space, and the method further comprises:

obtaining a third parking trajectory when an input of selecting the third idle parking space by the user is detected, wherein the third parking trajectory is a trajectory of parking the vehicle in the third idle parking space; and
controlling the display apparatus to switch from displaying the second recommended parking space set to displaying a third recommended parking space set, wherein the third recommended parking space set comprises the third idle parking space.

8. The method according to any one of claims 1 to 7, wherein the method further comprises:
controlling the display apparatus to display the first idle parking space set.

9. The method according to any one of claims 1 to 8, wherein before the obtaining a first idle parking space set, the method further comprises:
determining that a speed of the vehicle is less than or equal to a preset speed threshold.

10. A control apparatus, comprising:

an obtaining unit, configured to obtain a first idle parking space set, wherein the first idle parking space set comprises a first idle parking space and a second idle parking space; and
a control unit, configured to: when the obtaining unit obtains a first parking trajectory, control a display apparatus to display a first recommended parking space set, wherein the first recommended parking space set comprises the first idle parking space, and the first parking trajectory is a trajectory of parking a vehicle in the first idle parking space, wherein
the control unit is further configured to: when the obtaining unit obtains a second parking trajectory, control the display apparatus to switch from displaying the first recommended parking space set to displaying a second recommended parking space set, wherein the second recommended parking space set comprises the first idle parking space and the second idle parking space, and the second parking trajectory is a trajectory of parking the vehicle in the second idle parking space.

11. The apparatus according to claim 10, wherein the apparatus further comprises:

a first determining unit, configured to determine priority information based on at least one of a first parking space parameter, a second parking space parameter, and a historical parking record of a user, wherein the priority information indicates that a priority of obtaining the first parking trajectory is higher than a priority of obtaining the second parking trajectory; and

the first parking space parameter comprises a pose of the first idle parking space relative to the vehicle and a pose of the second idle parking space relative to the vehicle, and the second parking space parameter comprises information about an obstacle around the first idle parking space and information about an obstacle around the second idle parking space.

12. The apparatus according to claim 11, wherein the control unit is further configured to:
control, based on the priority information, the first parking trajectory, and the second parking trajectory, the display apparatus to display recommendation priorities of the first idle parking space and the second idle parking space.

13. The apparatus according to claim 12, wherein the apparatus further comprises:

a second determining unit, configured to determine a parking parameter based on the first parking trajectory and the second parking trajectory, wherein the parking parameter comprises at least one of a quantity of gear shift times, a parking risk, and parking time for parking the vehicle in each of the first idle parking space and the second idle parking space, wherein

the control unit is configured to control, based on the priority information and the parking parameter, the display apparatus to display the recommendation priorities of the first idle parking space and the second idle parking space.

14. The apparatus according to claim 12 or 13, wherein the recommendation priority of the first idle parking space is higher than the recommendation priority of the second idle parking space, and the apparatus further comprises a detection unit; and

the control unit is configured to: when the detection unit does not detect, within preset duration, an operation of selecting, by the user, a parking space from the second recommended parking space set, control the vehicle to automatically drive into the first idle parking space.

15. The apparatus according to any one of claims 10 to 13, wherein the apparatus further comprises a detection unit; and

the control unit is configured to: when the detection unit detects an input of selecting, by the user, the first idle parking space from the second recommended parking space set, control the display apparatus to display the first parking trajectory and prompt the user whether to park in the first idle parking space; and

when the detection unit detects an input of determining, by the user, to park in the first idle parking space, control, based on the first parking trajectory, the vehicle to drive into the first idle parking space.

16. The apparatus according to any one of claims 10 to 15, wherein the first idle parking space set further comprises a third idle parking space;

the obtaining unit is further configured to obtain a third parking trajectory when the user selects the third idle parking space, wherein the third parking trajectory is a trajectory of parking the vehicle in the third idle parking space; and

the control unit is further configured to control the display apparatus to switch from displaying the second recommended parking space set to displaying a third recommended parking space set, wherein the third recommended parking space set comprises the third idle parking space.

17. The apparatus according to any one of claims 10 to 16, wherein the control unit is further configured to control the display apparatus to display the first idle parking space set.

18. The apparatus according to any one of claims 10 to 17, wherein the apparatus further comprises:
a third determining unit, configured to: before the obtaining unit obtains the first idle parking space set, determine that a speed of the vehicle is less than or equal to a preset speed threshold.

19. A control apparatus, comprising:

a memory, configured to store a computer program; and

a processor, configured to execute the computer program stored in the memory, to enable the apparatus to perform the method according to any one of claims 1 to 9.

20. A control system, comprising a sensor and a computing platform, wherein the computing platform comprises the control apparatus according to any one of claims 10 to 19.

21. A vehicle, comprising the control apparatus according to any one of claims 10 to 19, or comprising the control system according to claim 20.

22. A computer-readable storage medium, wherein the computer-readable storage medium stores a computer program; and when the computer program is executed by a computer, the method according to any one of claims 1 to 9 is implemented.

23. A chip, comprising a circuit, wherein the circuit is configured to perform the method according to any one of claims 1 to 9.

Vehicle 100

Sensing system 120

Display apparatus 130

Computing platform 150

| Processor 151 | Processor 152 | ... | Processor 15n |

FIG. 1

FIG. 2

300

Obtain a first idle parking space set, where the first idle parking space set includes a first idle parking space and a second idle parking space

S310

When a first parking track is obtained, control a display apparatus to display a first recommended parking space set, where the first recommended parking space set includes the first idle parking space, and the first parking track is a track of parking a vehicle in the first idle parking space

S320

When a second parking track is obtained, control the display apparatus to switch from displaying the first recommended parking space set to displaying a second recommended parking space set, where the second recommended parking space set includes the first idle parking space and the second idle parking space, and the second parking track is a track of parking the vehicle in the second idle parking space

S330

FIG. 3

FIG. 4

FIG. 5

Color 1

Idle parking space 5

Idle parking space 4

Idle parking space 3

Idle parking space 1

Idle parking space 2

FIG. 6

Color 2

Idle parking space 5

Idle parking space 4

Idle parking space 3

Idle parking space 2

Recommended parking space 1

FIG. 7(a)

FIG. 7(b)

Color 3

Idle parking space 5

Idle parking space 4

Idle parking space 3

Idle parking space 2

Recommended parking space 1

FIG. 8(a)

FIG. 8(b)

Color 4

Idle parking space 5

Idle parking space 4

Idle parking space 3

Recommended parking space 2

Recommended parking space 1

FIG. 9(a)

901

A parking track of automatically parking in the recommended parking space 2 is displayed for you, and do you want to automatically park in the recommended parking space 2?

Tap to park

902

Idle parking space 3

Recommended parking space 1

Recommended parking space 2

FIG. 9(b)

FIG. 10(a)

FIG. 10(b)

FIG. 11

## INTERNATIONAL SEARCH REPORT

| International application No. |
|---|
| **PCT/CN2024/075258** |

**A. CLASSIFICATION OF SUBJECT MATTER**

B60W30/06(2006.01)i

According to International Patent Classification (IPC) or to both national classification and IPC

**B. FIELDS SEARCHED**

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNABS, DWPI, CNTXT, ENTXT, CNKI: 多, 车位, 轨迹, 优先, multiple, parking place, path, trajectory, priority

**C. DOCUMENTS CONSIDERED TO BE RELEVANT**

| Category* | Citation of document, with indication, where appropriate, of the relevant passages | Relevant to claim No. |
|---|---|---|
| X | CN 110901632 A (GREAT WALL MOTOR CO., LTD.) 24 March 2020 (2020-03-24) description, paragraphs 0123-0294, claims 1 and 8, and figures 1-15 | 1, 6-10, 15-23 |
| Y | CN 110901632 A (GREAT WALL MOTOR CO., LTD.) 24 March 2020 (2020-03-24) description, paragraphs 0123-0294, claims 1 and 8, and figures 1-15 | 2-5, 11-14 |
| Y | CN 113954823 A (HUAREN YUNTONG (SHANGHAI) AUTOPILOT TECHNOLOGY CO., LTD.) 21 January 2022 (2022-01-21) description, paragraphs 0047-0076, and figures 1-4 | 2-5, 11-14 |
| A | CN 109131316 A (CHERY AUTOMOBILE CO., LTD.) 04 January 2019 (2019-01-04) entire document | 1-23 |
| A | CN 109278742 A (CH-AUTO TECHNOLOGY CO., LTD.) 29 January 2019 (2019-01-29) entire document | 1-23 |
| A | CN 109800658 A (CATARC (TIANJIN) AUTOMOTIVE ENGINEERING RESEARCH INSTITUTE CO., LTD. et al.) 24 May 2019 (2019-05-24) entire document | 1-23 |
| A | DE 102015202480 A1 (ROBERT BOSCH GMBH) 18 August 2016 (2016-08-18) entire document | 1-23 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 March 2024** | **21 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/075258** |

**C.    DOCUMENTS CONSIDERED TO BE RELEVANT**

| Category* | Citation of document, with indication, where appropriate, of the relevant passages | Relevant to claim No. |
|---|---|---|
| A | EP 3323697 A1 (VALEO SCHALTER UND SENSOREN GMBH et al.) 23 May 2018 (2018-05-23)<br>     entire document | 1-23 |

## INTERNATIONAL SEARCH REPORT
### Information on patent family members

| International application No. |
| --- |
| **PCT/CN2024/075258** |

| Patent document cited in search report | | | Publication date (day/month/year) | Patent family member(s) | | | Publication date (day/month/year) |
| --- | --- | --- | --- | --- | --- | --- | --- |
| CN | 110901632 | A | 24 March 2020 | KR | 20220093095 | A | 05 July 2022 |
| | | | | JP | 2022551272 | A | 08 December 2022 |
| | | | | JP | 7379683 | B2 | 14 November 2023 |
| | | | | EP | 4023517 | A1 | 06 July 2022 |
| | | | | EP | 4023517 | A4 | 09 November 2022 |
| | | | | EP | 4023517 | B1 | 03 January 2024 |
| | | | | WO | 2021104476 | A1 | 03 June 2021 |
| | | | | US | 2022340127 | A1 | 27 October 2022 |
| | | | | US | 11745730 | B2 | 05 September 2023 |
| CN | 113954823 | A | 21 January 2022 | | None | | |
| CN | 109131316 | A | 04 January 2019 | | None | | |
| CN | 109278742 | A | 29 January 2019 | | None | | |
| CN | 109800658 | A | 24 May 2019 | | None | | |
| DE | 102015202480 | A1 | 18 August 2016 | DE | 102015202480 | B4 | 29 September 2022 |
| | | | | US | 2016240082 | A1 | 18 August 2016 |
| | | | | US | 9990849 | B2 | 05 June 2018 |
| | | | | FR | 3032671 | A1 | 19 August 2016 |
| | | | | FR | 3032671 | B1 | 19 February 2021 |
| EP | 3323697 | A1 | 23 May 2018 | DE | 102016122294 | A1 | 24 May 2018 |
| | | | | EP | 3323697 | B1 | 17 November 2021 |

Form PCT/ISA/210 (patent family annex) (July 2022)